# EUROPEAN PATENT APPLICATION

(11) **EP 4 570 068 A2**
(43) Date of publication of application: **18.06.2025**
(21) Application number: 25164146.0
(22) Date of filing: 16.03.2023
(51) Int. Cl.: A01N 1/143

(54) **SYSTEM AND METHOD FOR TISSUE MAINTENANCE, ASSESSMENT, MATURATION, AND REHABILITATION**

(30) Priority: 17.03.2022 US 202263269505 P
(62) Divisional of application: 23717782.9
(71) Applicant: DEKA Products Limited Partnership, Manchester, NH 03101 (US)
(72) Inventor: FILGATE, Joshua, Lyndeborough, 03082 (US); COULL, Scott A, Manchester, 03102 (US); CURTIS, Piper L, Manchester, 03104 (US); HENNING, Steven L, Manchester, 03102 (US); HOVAN, Bradley, Manchester, 03103 (US); MOREAU, Timothy D, Manchester, 03104 (US); WOODS, Alec C, Manchester, 03104 (US); JACOBSON, Stuart A, Lexington, 02421 (US)
(74) Representative: EIP

(57) **Abstract**

A method for maintaining tissue for transplant comprises: mounting the tissue on a tissue platform and preparing it for connection to a tissue enclosure; coupling the orifices of the tissue with pre-selected locations on the tissue platform through tubing and tissue platform connectors; directing venous output from the tissue into a fluid reservoir within the tissue enclosure; coupling the tissue platform connectors to a perfusion system; placing the tissue platform into the tissue enclosure, leaving an air space between the fluid reservoir and the tissue platform; measuring output from the tissue; recirculating perfusate from the fluid reservoir back into an artery of the tissue; monitoring and regulating the temperature of the perfusate prior to pumping the perfusate into the tissue; pumping a gas mixture into an oxygenation device configured to extract oxygen from the gas mixture and supply the oxygen to the perfusate as dissolved oxygen; and monitoring vitality of the tissue through monitoring a status of tissue resistance pressure and flow changes, oxygen consumption, carbon dioxide, and pH.

## Description

### CROSS REFERENCE TO RELATED APPLICATIONS

This application is a non-provisional of and claims priority to earlier filed US Provisional Patent Application No. 63/269,205, filed March 17, 2022 (AA706), the contents of which are incorporated herein by reference.

### BACKGROUND

The present disclosure relates to maintenance, assessment, maturation, and rehabilitation of a tissue for a transplant recipient. In 2020, there were about 39,000 transplants of all types of tissues performed in the United States. Every nine minutes, someone else is added to the transplant waiting list. There are a number of different types of tissues that arc utilized from organ donors. Tissues, including organs, that are considered for transplantation include, but are not limited to, kidney, pancreas, liver, heart, lung, stomach, intestine, composite allografts, thymus, uterus, skin, bone, tendon, middle ear, cartilage, heart valves, trachea, nerves, veins, hands, feet, arms, adrenal tissue, fetal thymus, cornea, and composite transplantation tissue. Regarding specific organs, in the United States in 2020, there were 12,141 people on the liver transplant waiting list, while only 8,906 transplants occurred. Pancreas, heart, lung, and intestine candidates awaiting transplants numbered 14,489. Further, while there were 91,834 kidney candidates on the transplant list, only around 20,000 kidney transplants were performed.

With respect to the kidney, in 2020, over 700,000 patients per year in the United States and an estimated 2 million patients worldwide were affected by end stage renal disease (ESRD). Further, morbidity among ESRD patients increased during the early months of the COVID-19 pandemic resulting in an estimated 6,953-10,316. The primary treatments for ESRD are dialysis and kidney transplant. In the United States, an overwhelming percentage of people with ESRD are on dialysis, with a small fraction living with transplants. In general, patients on dialysis have a lower life expectancy and lower quality of life than patients receiving a kidney transplant. Most transplanted kidneys come from deceased donors, and yet a large number of these available kidneys are discarded. Deceased donor kidneys have several challenges: higher rates of delayed graft function (DGF) post-transplant, longer warm ischemic time during kidney recovery, higher degree of cold induced injury, and lower long term graft survival rates.

In collecting tissue for transplantation, supporting tissues that feed necessary life support to the tissue as well as providing necessary connective tissue during transplantation are cut in a manner that leaves intact as much of the supportive tissue as possible. During storage and transplantation, support means are often connected, removed and reconnected to the supportive tissue to facilitate feeding life supportive nutrients to the tissue to be transplanted. During such connection, removal and reconnection, often incremental portions of the supportive tissues are cut or altered thereby reducing the supportive tissue available for later attachment during transplantation.

Cold storage of tissue for transport, while logistically effective, can injure the tissue, and assessing tissue health, particularly when the tissue is cold and not metabolically active, can be a challenge. The result of the cold storage cycle (warm-cold-warm) can cause a chain reaction of oxygen deficiency that can result in ischemic injury. The initial effects of such injury can include delayed graft function, and there can be a long-term effect on kidney function.

Current methods of tissue screening can be flawed and may not provide direct measures of tissue health. When a tissue is considered possibly marginal, the tissue screening system is biased towards discard. As a result, a large fraction of donated tissue (21% or 5,051 kidneys in the United States in 2020 alone) is discarded each year. Studies have found that a sizable fraction of these discards could have been transplanted with resulting favorable outcomes for the patients. A thorough quantitative *ex vivo* assessment of the tissue is critical for reducing discard rate. *Ex vivo* tissue assessment can remove dependency upon donor scoring, and provide a real-time measurement of tissue heath, which can ease the mind of risk-averse doctors. Other future options can include immunomodulatory drugs that can make donor matching matter less, gene therapy to treat tissue *in vivo,* tissue engineering, and tissue transplantation.

Still further options include normothermic/subnormothermic perfusion which is likely to extend preservation time, enable real-time tissue diagnostics, and significantly reduce cold-induced injury. Extended preservation time increases the likelihood of finding a recipient for the tissue. Preservation techniques such as *ex vivo* normothermic machine perfusion (NMP) can be used to assess the quality of the tissue before transplantation before committing the recipient to surgery. Normothermic or subnormothermic perfusion results in a metabolically active tissue, which can enable assessment via direct measures of kidney function and through enabling laboratory analysis of tissue, perfusate and urine samples.

What is needed is a system that provide a releasable interface with a tissue, that allows the necessary nutrients to flow to the tissue to maintain its vitality before transplantation, while preserving supportive tissues in a manner that allows interfacing with the tissue of the recipient during transplantation. What is needed is a system that can allow medical personnel to observe, sample, or otherwise collect data on metabolically active tissue, to help assess tissue health and viability. Such a system could sense a sufficient range of characteristics, including but not limited to glucose and pH. A successful tissue maintenance and assessment system can provide medical personnel with quantitative measures of tissue health, enable reconditioning of the tissue to optimize its performance prior to implant, and enable *ex vivo* treatment of the tissue, for example, but not limited to, pharmacologic and gene therapy. What is further needed is a system that achieves low hemolysis and maintains desired characteristics of the tissue. What is needed is a normothermic/subnormothermic tissue perfusion device with onboard sensors to simulate body circulation and monitor the tissue, respectively.

### SUMMARY

In accordance with some configurations, the present teachings include a system and method for tissue perfusion in order to maintain and possibly rehabilitate the tissue. Among other features, the system of the present teachings can include a tissue enclosure having a fluid reservoir. Pumps, valves, and a controller can move perfusate through the tissue. The system can include features to assist in monitoring the health of the tissue, and a removable tray to facilitate moving the tissue from a point of origin to the tissue enclosure. The system of the present teachings is fully configured to perfuse and provide nutrition for transplant tissue such as, but not limited to, human tissue. Other features of the system of the present teachings include, but are not limited to, a urine flow rate sensor, a nutrition pump, disposable and durable parts, and non-invasive sensors.

The system of the present teachings can include at least one controller or processor that can enable valves and pumps to perfuse fluids through tissue, for example, but not limited to, a human tissue. The at least one controller/processor can be, for example, but not limited to, a general purpose processor managing several tasks, a custom processor configured to manage a specific task, a proportional controller, and integral controller, a derivative controller, a programmable logic controller, a distributed control system, a programmable automated controller, a microcontroller, a microprocessor, an embedded processor, or supervisory control and data acquisition software. The controller/processor can receive data from sensors located throughout the system and other forms of data input, and can adjust, among other things, the pumps and valves according to the data. For example, the controller/processor can receive user input, recipe input, and/or default settings that can be used, along with values of the sensor data, to adjust the flow parameters of the perfusate. In some configurations, the controller/processor can access a default method of perfusion for a specific type of tissue. The default method can supply a standard set of instructions that have been found to normally elicit a desired result for the tissue. The default method can be changed dynamically when sensor data indicates that the standard instructions may not achieve the desired result. User input can also result in changes to the default method.

In addition to controlling perfusate flow, the controller/processor can issue instructions to pumps and valves that regulate the provision of infusion/nutrition to the tissue. In some configurations, infusion/nutrition can be pumped into the perfusate in a fluid reservoir that is in fluidic communication with the tissue. The contents of possible infusion/nutrition options can be pumped into the fluid reservoir when sensors indicate a need for perfusate modification. The system of the present teachings can include a pumping cassette that can deliver, under direction from the controller/processor, the infusion/nutrition at a possibly variable rate specific to a particular tissue, and specific to the current status of the tissue. The controller can perform processing associated with the specific sensor suite. In some configurations, the controller can automatically determine which sensors are available in a particular system and execute processes associated with the identified sensors.

The system of the present teachings can include a pump subsystem that can enable tissue perfusion and perfusate recirculation. The pump subsystem can pump perfusate, for example blood and other additives, through the tissue. The blood can include whole blood or a diluted/modified/altered blood composition, for example. In some configurations, the pump subsystem can enable perfusate flow at a rate of up to 600 ml/min at a mean arterial pressure of 20-120 mmHg. Flow can optionally be pulsatile, and the flow rate and rate of the pulse can be adjustable. As an example, a low arterial pressure and flow rate can be required for cold or damaged tissue. As tissue function improves, the arterial pressure and flow rate can be adjusted to accommodate the changed conditions. Pulsatile flow or a flow rate controlled by physiological parameters can both be accommodated by the pumps of the present teachings. In some configurations, direct acting pneumatic pumps can be used in tandem to supply a continuous flow of perfusate. Direct acting pneumatic pumps can include active inlet and outlet valves so that flow in a perfusate flow circuit can be highly controlled. Kidneys, for example, can tolerate a flow rate of 200-600 mL/min flow rate. One goal of pump choice is to reduce hemolysis. Direct acting pneumatic pumps can enable minimal hemolysis and flow metering for wetted materials as discussed herein. It can be possible to modify the pumping cycle of direct acting pneumatic pumps to match physiological pulsatile pressure duty cycles.

In some configurations, a variable pressure scheme for the negative (gauge) pneumatic pressure is used when filling pumping chambers of a pumping cassette by means of suction. The overall objective is to minimize the amount of suction pressure required, since it is well known that minimizing suction minimizes the shear if the on the blood cells in the perfusate to avoid hemolysis. To this end, the minimum necessary fill pressure is identified to ensure that the end of the fill stroke for one chamber aligns with the end of the deliver stroke of the other chamber (plus a bit of buffer time). The process includes, but is not limited to, the following steps. (1) While filling the chamber, the pressure in the chamber itself and the pressure in the regulated negative tank (the negative pressure source) are monitored. The time when these pressures equalize (to within+/- 5 mmHg) is noted. This equalization occurs when the chamber membrane stops moving, hence it indicates the actual end of the fill stroke. (2) The time when the chamber is disconnected from the regulated negative tank is noted. This is based on a time offset from the start of the fill stroke, and is the scheduled end of the stroke. (3) When preparing for the next stroke, the time difference between these two times is calculated. (4) If the actual end of the fill stroke occurs before the scheduled end of the fill stroke by a pre-selected amount of time, for example, but not limited to, >200 ms, the suction pressure was higher than necessary. In this case, the suction pressure is reduced by, for example, but not limited to, 1 mmHg, down to a minimum of -40 mmHg gauge pressure. (5) If the actual end of the fill stroke occurs too near in time to the scheduled end of the fill stroke, for example, but not limited to, <50 ms, or did not occur at all, the relative pressure difference was not high enough to fully fill the chamber. In this case, the suction pressure is increased by, for example, but not limited to, 1 mmHg, up to a maximum of -140 mmHg. (6) When preparing for the next stroke, if the fill and deliver timing was reduced (that is, if the time from the start of the fill stroke to the scheduled end of the fill stroke was reduced), then the suction pressure is increased pre-emptively to ensure the next fill stroke completes in time. For example, if the fill time is reduced by >50 ms, then the fill pressure is increased by 5 mmHg (up to a maximum of -140 mmHg). (7) In order to ensure the two pumping chambers remain in sync, the checks in the steps of this process are conducted on one of the two chambers to prevent timing mismatches or pressure oscillations. In an aspect, a visual sensor is used to detect the location of the stroke. Because blood has an IR response, or a visual response, a visual sensor detects the thickness of blood in front of the membrane to determine where the membrane is on the stroke.

In some configurations, the pump is direct acting, where compressed air (or vacuum) is used to push/pull a membrane against fluid. A set of valves controls movement of a membrane associated with one or more pumping chambers. In some configurations, there are two pumping chambers. At the start of each stroke, one fills and one delivers. A new stroke is not completed until the sequence is complete. Partial strokes are possible to, for example, mitigate hemolysis. In some configurations, a sensor including but not limited to visual, infrared, or ultrasonic may be used to identify the position of the membrane within the chambers to control delivery volumes and ensure short strokes. The pumps control the nominal pressure in the pumping chamber by throttling the supply valves. In pump pressure control mode, the fill/deliver nominal pumping chamber pressure can be adjusted. Higher relative pressures (or vacuum) will result in faster filling or delivery times. The pump can provide smooth/consistent flow, or may provide pulsatile flow. In some configurations, the system can include multiple controllers, for example a valve controller, a pumping chamber controller, and a pump controller.

The role of the perfusion loop is to replicate basic biological functions that would otherwise take place in the body. These include oxygenation, control of carbon dioxide, thermal control, and nutrient supply. Oxygenation and carbon dioxide control are conducted through the use of a membrane oxygenator. A heat exchanger is used to maintain desired perfusate temperature. The perfusion fluid leaves the tissue, is passed through an oxygenator, is passed through a heat exchanger, and is then pumped back into the tissue. Nutrients are suppled in the perfusion solution and can be added manually or through the use of automated infusion pumps. Output generated by the tissue flows out of the tissue and is available for sampling through sterile sample ports. Output can be directed back into the perfusion loop or discarded. Output flow rates and volumes are measured and stored by the system. In the event that recirculating output proves to be a challenge, the system can be modified such that the output is collected or potentially passed through a dialysis loop.

The perfusion loop acts like a maintenance loop for the system allowing for filling or draining of the fluid reservoir and recirculation of the fluid from the fluid reservoir, essentially stirring the fluid reservoir. This loop can include the infusion pumps so that infusions can be delivered, diluted, and mixed into the perfusate instead of being passed directly into the tissue. Some or all of the infusion pumps can be made part of the perfusion loop. In some configurations, the system includes a bypass valve that can be opened during priming when bubbles are detected. To introduce new perfusate components or drain the system, the system includes at least one valve associated with the infusion path. In some configurations, a pinch valve can be associated with incoming perfusate, while another pinch valve can be associated with a drain path. In an aspect, pneumatic valves can be used. Other types of valves are contemplated by the present teachings. The perfusate pump can also drain the tissue enclosure.

The system includes means for monitoring, for example, the tissue, the perfusate, and the tissue's output. The data collected during monitoring can be used to adjust, for example, the environment of the tissue and the characteristics of the perfusate. Any types and numbers of sensors can be used for monitoring, and the controller can be programmed to automatically or manually respond to a detected situation. In some configurations, the concentrations of nutrition provided, the dissolved oxygen and carbon dioxide in the perfusate, the hemoglobin oxygen saturation level, the perfusion pumping rate, the glucose and lactate concentration in the perfusate, the temperature, and/or the pH are monitored through a group of sensors strategically positioned in the perfusion loop. The system includes sensors both in and out of the fluid path to enable adequate perfusion and collect data for tissue assessment, sterile sample ports for removing output and perfusate fluids using a sterile syringe. In an aspect, the system includes pressure sensors on tubing exiting the pump and exiting the heat exchanger. In an aspect, the membrane between the heat exchanger channels and the thermal control plate includes a pressure sensor. In an aspect, the system includes a flow sensor and/or a drip sensor to measure output that is collected from the cannulated tissue. The system can optionally include a first of at least one oxygen saturation sensor monitoring oxygen saturation of the perfusate before the perfusate enters the tissue, and a second of the at least one oxygen saturation sensor monitoring the oxygen saturation of the perfusate leaving the perfusate reservoir. The system can optionally include a first of at least one dissolved oxygen sensor monitoring dissolved oxygen in the perfusate leaving the perfusate reservoir, and a second of at least one dissolved oxygen sensor monitoring dissolved oxygen in the perfusate before the perfusate enters the tissue.

The system can optionally include at least one pH sensor monitoring pH of the perfusate leaving the fluid reservoir, and at least one means to measure oxygen levels. One possible means is to use a dissolved oxygen sensor to monitor dissolved oxygen of the perfusate in the fluid reservoir, and a second of at least one dissolved oxygen sensor monitoring dissolved oxygen of the perfusate before the perfusate enters the tissue. Another possible means is to measure hemoglobin saturation if there are red blood cells in the perfusate, or if oxygen is above 100% saturation during perfusion and need to measure the dissolved oxygen in order to calculate the total oxygen level. The system can optionally include a first of at least one pressure sensor monitoring pressure of the perfusate before the perfusate enters the gas management subsystem, and a second of the at least one pressure sensor monitoring the pressure of the perfusate before the perfusate enters the tissue. The system can optionally include a glucose sensor and a lactate sensor to monitor glucose and lactate. In an aspect, characteristics of the circulating perfusate are determined by sensors embedded in the fluid pathway. In some configurations, dissolved oxygen, pH, temperature, and oxygen saturation are measured, among other characteristics, as the perfusate circulates. The sensors, which can include low-cost, single-use spot sensors, can be chosen based on the tissue being perfused.

The tissue enclosure provides a barrier to contamination for the tissue as it is being maintained. In an aspect, the tissue enclosure includes three main parts - a fluid reservoir, a tissue platform, and a hood, all operably coupled to form an isolation environment for the tissue. The geometry of the tissue enclosure includes connectors to receive the tissue platform, connectors and seals to receive the hood, a reservoir to house the fluid, an air space above the fluid in which the tissue platform is placed, and a fluid ramp receiving at least some of the tissue output and channeling the output towards the fluid reservoir. A temperature control mechanism is positioned in the vicinity of the tissue enclosure. In an exemplary configuration, the temperature control mechanism is positioned beneath the tissue enclosure, and is fluidically coupled with the tissue enclosure.

In some configurations, the tissue enclosure is a disposable component that is configured to be securely connected and disconnected from a set of durable components described herein. In an aspect, one possible secure means to connect the tissue enclosure to the durable components is the interaction between features on the tissue enclosure that operably couple with a durable hinged component. In an aspect, the operable coupling includes pins that travel through a groove in the hinged component and rotate at least one cam. The at least one cam, when rotated, exerts pressure upon the tissue enclosure feature(s) to drive the tissue enclosure, heat exchanger side, in secure contact with the thermal control plate. The tissue enclosure coupling/decoupling means is augmented by a locking mechanism described herein that couples the disposable components of the perfusion pumping assembly with the durable interface to the pneumatic assembly.

In an aspect, the fluid reservoir receives, for example, but not limited to, output products from the tissue, venous output from the tissue, and possibly nutrition and medications. The types and amounts of components in the fluid are not limited to such additives as are listed herein, but instead include components that are appropriate for the type of tissue being maintained. The fluid reservoir sits below the tissue platform, and thus, the tissue resides in the air space above the fluid reservoir. Perfusate is pumped from the fluid reservoir and its characteristics and temperature are adjusted and monitored before it is pumped into the tissue.

The tissue platform includes a means for stable connection between the platform and the tissue enclosure. In an aspect, connections have self-mating features, snap-together features such as an annular snap lock, a torsional snap lock, and a cantilever snap lock, latched features, hooked features, mating detents, interlocking features, press-fit, interference-fit and bolting. In an aspect, connections serve multiple purposes, if necessary, possibly providing electrical and/or data interface through plugs or jacks. In an exemplary configuration, the tissue platform includes female position alignment features. The tissue platform also includes at least one handle for retracting the platform from the tissue enclosure. The at least one handle can include an unfeatured pull handle, a pull handle with ergonomic features such as grips, a recessed folding pull handle, an offset pull handle, a utility handle, recessed handle, edge pull, and extending handles. In an exemplary configuration, the at least one handle includes a fixed pull handle with ergonomic features. The at least one handle can be affixed to the tissue platform or can be attached to the tissue platform before retraction or placement of the tissue platform. Multiple handles can be affixed to the sides of the tissue platform or to the center or within the body of the tissue platform.

The tissue platform can optionally be partitioned into areas of the platform floor. One area can be configured to receive the tissue. The tissue itself can be positioned on the platform floor on which it can be cannulated or otherwise operably coupled with perfusion tubes. In some configurations, the tissue is secured to the platform by, for example, a strap, tie-down, belt, or cord anchored in depressions on the rim of the tissue platform. Part of the floor can be configured to manage the tubing or possibly cabling. Tube management can include, but is not limited to including, weld mount clamps, rail clamps, magnetic clamps, snap-in clamps, multiline clamps, connectable clamps, expansion clamps, adhesive-back clamps, lock-close strut-mount clamps, standoff clamps, low profile clamps, and loop clamps. In an exemplary configuration, tubes and cables are routed through merlons positioned on the floor of the tissue platform, spaced according to, for example, the expected sizes of tubes and cables. Other tube and cable mount points enable the tubes and cables to be raised above the floor of the platform. In an exemplary configuration, one or more standoff features is configured with tube holders such as bent finger-like projections. In an exemplary configuration, the tubing and cables are routed along the sides of the tissue platform between crenellated edges to enable tube/cable routing between the tissue platform and other parts of the tissue maintenance system. The crenellations can be spaced according to a desired or expected tube/cable size. Multiple tubes/cables can be accommodated by the spaces between the crenellations, if desired. The tubing or cabling is routed to exit the tissue platform by, for example, but not limited to, ductwork, routing tubing, routing panels, or channeling. The tubing is coupled with connectors that enable connection to further tubing in the tissue enclosure. The on-board coupling between the tissue and the perfusion tubes or other required system connections makes it possible to ready the tissue for management by the system remotely from the tissue enclosure and convenient to the location of the tissue. This can reduce the amount of manual manipulation the tissue has to endure.

In an aspect, the floor of the platform is configured to receive fluid such as output products and venous fluids from the tissue. The floor can include a drainage means so that the tissue fluids can exit the platform floor without stagnating around the tissue. In an exemplary configuration, the floor is sloped towards a drain cavity in the floor. The drain cavity allows the tissue fluid to flow from the tissue to the fluid reservoir below the platform. In an aspect, the tissue enclosure is configured to channel the fluid from the platform so that it enters the tissue reservoir in a controlled way. In an exemplary configuration, the tissue enclosure includes a ramp that ensures that the fluid enters the fluid reservoir at an angle.

Other platform configurations are contemplated by the present teachings. The platform, detachable from the fluid reservoir, can be the only part of the system that could be specific for a tissue type, although platforms are contemplated to be used for multiple tissue types. The platform described herein, used for a kidney, illustrates the features of a particular platform. The present disclosure is not limited to accommodating a kidney platform, nor to the geometry of the kidney platform.

In an aspect, the tissue enclosure includes a hood that includes a durable/disposable barrier and houses at least one sensor. The barrier and gasket fitted to the tissue enclosure protect the tissue on the tissue platform from external environmental conditions. The barrier enables manual and automatic observation of the tissue on the tissue platform, and is securely attached at the rim of the tissue enclosure to fully shelter the tissue while still providing viewing options. Observation can include providing images of the tissue, which can aid a user in assessment of the tissue. For example, the tissue can be measured, the color of the tissue can be observed to detect, for example, insufficient perfusion free hemoglobin or bacterial infection, and the size/shape over time of the tissue can be determined to detect, for example, if the tissue is undergoing edema. If the tissue performs a particular physiological function, the user and/or the controller can observe the function of the tissue over time.

In an aspect, the barrier is associated with an anti-fog means to reduce condensation, aiding in tissue visibility through a window in the barrier. The window can occupy the entire barrier, or simply a portion of the barrier. In an exemplary configuration, the anti-fog means includes a heating wire mounted adjacent to the barrier, or threaded throughout the barrier material. Typically, fogging occurs in cooler environments, possibly making insulation of the tissue enclosure and thermal control features necessary to, among other reasons, enable observation of the tissue. Anti-fog materials such as polypropylene can bead moisture build-up. Anti-fog coatings on, for example, glass and plastic surfaces, can be used as well, including, but not limited to, polyvinyl alcohol molecules, surfactants such as detergents, and hydrophilic coatings such as polymers and hydrogels. The cleared window enables the use of standardized imaging, optical measurements, and advanced images such as thermal imaging, IR imaging, and hyperspectral imaging. Through the cleared window, the user can observe the appearance of the tissue without breaking the sterile barrier. Thermal management of the walls of the tissue enclosure has an additional benefit of encouraging moisture retention on the exterior of the tissue itself, preventing the tissue from drying out, and eliminating the need for additional moisture controls such as placing wet gauze on the tissue. Additionally, the effect of thermal management on moisture reduces hemolysis by preventing gradients through removal of pure water, and reintroducing pure water when condensation drops drip back into the perfusate.

Manual observation can include viewing the tissue through the transparent barrier. In some configurations, the barrier may be opaque and manual observation may not be possible. The hood can house sensors that can enable assisted and automatic observation. The sensors can include, but are not limited to including, image sensors such as CCDs, optical sensors, X-ray devices, and ultrasonic devices, among others. In an exemplary configuration, the hood houses a camera mounting device and a camera. Data collected by the sensors can be provided to a controller, and/or a local display, and/or a handheld/wireless device, for example. Data can be stored and tracked, and automatic analysis can be conducted on, for example, the image data collected to automatically determine the status of the tissue over time. In an aspect, the image sensors are mounted either outside or inside of the barrier, while other types of sensors whose data can provide context to the image data arc mounted within the hood. Such sensors can include non-contact or contact sensors, and can measure, but are not limited to measuring, temperature, pressure, pH, oxygen, carbon dioxide, and glucose data. The sensor data can be collected wirelessly or by wired connections between the sensors and the controller. In an aspect, the sensors include a camera with associated lighting. In an aspect, the camera can be disposable. The sensor data provide tissue appearance data in real-time. The user can use these data to inspect the tissue for key areas of concern such as, for example, but not limited to, color, edema, hypoxia, bleeding, and leaking. In an aspect, the sensor data are logged and can be evaluated over time to assess changes. Sensor- detectable clues to edema include a size increase over time of the tissue. Sensor-detectable clues of poor perfusion include change of color of the tissue, and bleeding/leaking. Sensor-detectable clues of kidney failure, for example, include seizures. Sensor-detectable clues of a ureter issue, for example, include absence of ureter motion. The areas of concern are based upon the type of tissue and other factors.

The system of the present teachings pumps perfusate in a closed loop through the tissue. In an aspect, the system includes one or more fluid pumps to accomplish the perfusion. Types of perfusion pumps include, but are not limited to including, axial flow pumps, peristaltic pumps, diaphragm pumps, pumping cassettes, roller pumps, centrifugal pumps, pulsatile pumps, and non-occlusive roller pumps. A pump that can enable the perfusion of the system of the present teachings can deliver physiologic blood flows against high resistance without damaging blood, provides flows that are exact and easily monitored, creates no turbulence or stagnation, and can be manually operable in the event of a power failure. In some configurations, extracorporeal membrane oxygenation (ECMO)-type devices are used to perfuse and oxygenate the blood in the system. In some configurations, the oxygenator device uses silicone membrane contactors. The perfusate is pumped through several possible modification stations and past several sensors before entering the tissue. In an exemplary configuration, a pumping cassette, at the direction of the controller, can move perfusate from the fluid reservoir into an oxygenator. An exemplary cassette pump is described in United States Patent # 9,999,717, Systems and Methods for Detecting Vascular Access Disconnection, issued June 19, 2018.

In an aspect, the pumping cassette, having a first side including number of valve wells and second side having a fluid bus, is used. In an aspect, each side is covered by a flexible membrane, and a control surface having a number of valve well control stations actuatable with respect to the flexible membrane covering the first side of the cassette to open and close the valve wells when the cassette is mated against the control surface is included. In an aspect, the pumping cassette includes two chambers. Use of the chambers can alternate in order to produce continuous flow, or can be timed so as to produce a pulsatile flow. A pressure distribution assembly having a positive and negative pressure source and a number of pneumatic valves may be included. The controller is configured to selectively actuate the number of pneumatic valves to apply pressure against the valve well control stations in a valve pumping sequence until a volume is displaced through the fluid bus of the pumping cassette from a source to a destination within a range of a target volume. The flow rate and pressure of the perfusion pump as it pumps perfusate through the system are regulated so that flow rate and pressure of the perfusate going into the tissue are regulated. The resistance of the tissue may change over time, for example, with changes to physiology. The pressure of the pumped perfusate may need to change over time to accommodate the tissue's needs. Over-pressuring the fluid line can cause lysing.

Mechanical means of cell damage can be caused by, for example, mechanical trauma, extremes of temperature, sudden changes in pressure, radiation, and electricity. A possible form of mechanical trauma can be caused indirectly by a perfusate pump. To avoid this form of mechanical trauma, the system of the present teachings includes a flow sensor to measure flow rate and at least one pressure sensor to measure perfusate pressure. The flow rate and pressure of perfusate that is pumped through the system is adjusted to a desired amount Pressure management in the system of the present teachings includes establishing a desired pressure and applying that pressure on the pneumatic side of the pumping cassette. The flow rate, as determined by a flow meter in the perfusion path is integrated over time to determine the volume of fluid perfused over an amount of time. Because the volume of the pumping chamber on the fluid side of the pumping cassette is known, and the volume of fluid over a pre-selected amount of time is known, when the volume of fluid in the pumping chamber reaches a pre-selected level, the controller switches chambers. This form of control can, for example, avoid mechanical trauma, and therefore limit hemolysis, to cells in the perfusate because the perfusate in not pressed against the bottom of the pumping chamber by the membrane. For example, when the chamber is 95% full, the controller can switch pumping chambers. The pressure that is required to reach the desired fluid pressure at the inlet to the tissue is the desired pneumatic pressure. The desired pneumatic pressure can, at least in part, control the mechanical means of cell damage explicitly to ensure that cell damage in the perfusate is limited to a desired level. In an aspect, a flow meter monitors an instantaneous flow rate and integrates the volume. As the control loop runs, the pump ensures that the membrane for the direct-acting pump does not lyse red blood cells.

The flow meter is used to adjust the pressure on tissue as the thermal profile of the tissue changes. For example, when the tissue warms, its blood vessel expand reducing fluidic resistance and the allowable perfusate flow though the tissue at a given pressure generally increases. In an aspect, the surface temperature of the tissue is used to adjust the pumping pressure of the perfusate. The resistance of the tissue to perfusion is a function of the pressure and the volume of liquid being perfused over a pre-selected amount of time. Renal resistance is defined as the pressure divided by the flow rate. If the flow is laminar, the renal resistance will nominally scale like (L/D⁴) where L is an average vascular length through the kidney, and D is an average vasculature diameter in the kidney, which is a function of temperature and kidney health. Renal resistance is proportional to the ratio of the pressure on the perfusate to the flow volume. In an exemplary configuration, pressure is adjusted automatically based on surface temperature of the tissue or calculated resistance.

The tissue receives perfusate into a cannulated orifice of the tissue, and produces output through another cannulated orifice of the tissue. For example, if the tissue is a kidney, at least one of the outputs is urine. At least one output from the tissue is routed from the tissue for monitoring of the output before the output is routed hack into the fluid reservoir or is routed to a waste area. To enable monitoring of the output, the system includes an output flow device that includes a collector container and sensors and a means for managing the collection device accumulation. The container can take any shape and can, for example, include graduated fill marks. Convenience of mounting the container with respect to the platform and output measurement criteria can be considered when choosing a container shape and size. The container includes at least one sensor that indicates, to a controller, the level of the output in the container. In some configurations, the container is coupled with a plurality of sensors, at least one at a desired output high level, at least another at a desired output low level. When the output reaches the high level sensor, the controller directs the valve to open to release the output. When the output reaches the low level sensor, the controller directs the valve to close, thereby retaining the fluid in the container again. In an exemplary configuration, the level sensor includes an ultrasonic sensor. In an aspect, the level sensor includes at least one visual sensor that determines the level of the fluid by locating floats within the fluid. The present teachings contemplate multiple high and low levels to enable various types of measurements. The valve includes, but is not limited to including, being selected from ball, butterfly, check, gate, knife gate, globe, needle, pinch, and plug valves. In an exemplary configuration, the valve is a pinch valve. In an aspect, the valve is a pneumatic valve. In some configurations, the output flow container is configured so that visual inspection of the output is possible. For example, the output passes through a transparent or partially transparent container. The container can be fully opaque except for a window, or can be substantially transparent, or some layout in between.

Other methods to evaluate the tissue output over time are contemplated by the present teachings. Monitoring of the output can occur manually, automatically, in real-time, and through post processing. Types of sensors can include, but are not limited to including, visual, e.g. cameras, IR, X-ray, temperature, pressure, chemical, ultrasonic, humidity, color, and light. Real-time manual monitoring can be enabled by a transparent collector into which the output can flow and collect. In an exemplary configuration, the transparent collector includes graduated marks associated with a desired granularity of collection amounts. In an aspect, the collector is opaque to electromagnetic radiation to protect the output from degradation due to exposure. If the collector is opaque, sensors in addition to the fill sensor are mounted inside and outside the collector to enable manual and automatic monitoring. The sensor data can include an amount of output, characteristics of the output, and elapsed output collection time, for example. The sensor data can be wirelessly or wired transmitted to the controller, a display, or a portable device that can be manually monitored. The controller receives data associated with the output and performs real-time automatic monitoring that can include analysis of the sensor data collected while the output is collected and flowing. The controller can change at least some of the characteristics of the system based on the analysis, if necessary. The controller can control off-line automatic monitoring by collecting a sample, subjecting it to tests, possibly lengthier in duration than the real-time tests, and logging the data or using the information to manage the controllable characteristics of the system. In an exemplary configuration, the tissue is a kidney, and the output is urine output. Urine output from the kidney can be measured and compared to expected amounts to evaluate the kidney's function. Urine output color can be observed/measured, and urine can be tested for, for example, acidity, concentration of particles, protein, sugar, ketones, bilirubin, evidence of infection, and blood. Possible sensors include optical sensors to measure the color of the urine. For example, free hemoglobin in the urine, blood, or osmolality in the urine can be detected optically. Some of these tests can be performed in real-time and the amount of nutrition can be modified, or the amount of carbon dioxide can be adjusted to move the kidney to a healthy state, for example. Some of the tests can be performed through post-processing, and the results can possibly be used to manage the perfusion of the kidney. In an aspect, the output container is transparent and includes a reservoir that allows the user to visually monitor the flow rate, color, and opacity of the output in real time. A sample of the output can be removed and tested offline, and/or the output can be returned to the perfusate reservoir.

In some configurations, the output flow device is configured with a sample means. The output can be sampled as it enters or exits the container. Samples can be examined in real-time, or off-line. The output can be directed, by tubes and valves, to a sample vessel, back into the perfusate reservoir below the tissue platform, or elsewhere. The controller directs routing valve(s) to open and close depending in the desired destination of the output, or, for example, on the amount of output to sample, among other options. In some configurations, a single 3-way valve is used to receive the output, send the output to a sample vessel, or send the output into the perfusate reservoir below the platform. In some configurations, the output can be driven passively by a combination of the force of the tissue to move the output from the tissue into the output flow device, and by the force of gravity moving the output from the container for further processing. For gravity to play a role, the output container is positioned above the perfusate reservoir below the tissue platform. In some configurations, the output is pumped from the tissue or output reservoir into the flow meter, and is pumped from the container to be sampled or to rejoin other tissue perfusates, for example. Off-line manual monitoring can be enabled by routing some of the output to a sample collector. The output flow device container output tubing can be bifurcated. One branch of the bifurcated tubing can travel through a valve controlled by the controller and back into the perfusate reservoir. Another branch can travel to a sample vessel. The controller manages which branch is taken by controlling a valve at the bifurcation. The sample can be visually inspected, for example, or can be subjected to chemical and/or biological analyses that can be manually reviewed. In an exemplary kidney process, a sample of urine is collected and disposed of at the beginning of perfusion to remove urine that contains, for example, inflammatory markers. In an aspect, the first 50 mL or whatever is collected over 1.5 hours of collection is discarded. Monitoring can lead to changes. For example, if the user observes that output is not an expected color or quantity, the user can make manual changes to the currently-executing perfusion path, or can direct the system to make a series of changes automatically. For example, if the urine is observed to be red, there is either blood or free hemoglobin in the urine. The system can automatically stop recirculating urine and start infusing amendments to the kidney such as nutrition and medication. If cloudy urine is detected, the system can automatically raise an alarm to alert the user as this observation might indicate a bacterial infection. In the system of the present teachings, observation of output color is enabled by a transparent output container, and observation of output quantity is enabled by the output measurement system of the present teachings. Likewise, if a user observes that the characteristics of the perfusate are insufficient for adequate tissue preservation, the user can override default instructions and take actions to modify the characteristics. In some configurations, the user can initiate the perfusion process and manually control the entire process. In some configurations, the user begins manual control after the system has performed a certain number of steps. In some configurations, automatic operations are so sophisticated that user input may not be needed at all, or possibly not until the end of the perfusion cycle, as possibly judged from the characteristics of the tissue, or the amount time that has elapsed, for example. Indicative kidney characteristics can be, for example, determined from inspection of concentrations of creatinine clearance, fractional excretion of creatinine, and fractional sodium excretion present in the urine. Pool et al., Prolonged ex-vivo normothermic kidney perfusion: The impact of perfusate composition, PLoS ONE 16(5): e0251595. https://doi.org/10.1371/journal.pone.0251595, May 18, 2021, p. 4 (Pool).

The system of the present teachings provides nutrition and medications, for example, to the tissue when required. The controller controls a device that accesses various infusion materials, depending on the needs of the tissue. Nutrients and medications can include, but are not limited to including, water, lipids, amino acids, glucose, vitamins, hormones, antibiotics, chemotherapy drugs, vasodilators, vasoconstrictors, diuretics, antidiuretics, anticoagulants, and insulin. In an aspect, a kidney's characteristics are controlled by regulating infused substances, monitoring the results of the infusions on the characteristics of the kidney, and then adjusting the infusion rate based on the results. Nutrients are provided by infusion pumps, devices that deliver nutrients and medications in controlled amounts. The pump is configured, either automatically or manually, to provide specific nutrients at a specific flow rate. Automatic infusion configuration occurs when the system of the present teachings determines which kind of tissue is being processed and sets the nutrition and medication regime automatically. Manual infusion configuration occurs when the system accesses, or a user provides, set-up parameters such as the components of the nutrients and/or medications, the delivery rates, and times of delivery. In any case, the controller determines when there is a potential or actual pump failure, or when there is a potential or actual drug interaction problem, among other types of alerts. In an exemplary configuration, nutrition and medication are pumped into the fluid reservoir by a infusion pumps, the possibilities of which are described herein. In an exemplary configuration, a pumping cassette pumps the nutrition and medication to the tissue, either directly into the arterial line or into the reservoir. In an aspect, the pumping cassette is sized to accommodate the requirements of supplying nutrition/medication. For example, the pumping cassette includes a single chamber that pumps a pre-selected amount of fluid at a consistent rate, such as 10 ml/hour. In an aspect, sensors measure the consumption rate of the nutrients/medications, and those sensor data are used to control the infusion of those components. For example, a glucose sensor measures how much glucose is in the perfusate exiting the tissue, and that measurement is used to adjust the amount of infused glucose based on the metabolic rate of the tissue. The nutrition pump of the present teachings is configured to pump from an intravenous bag at rates of 1-20 mL/hour, removing the need for an IV pump. In an aspect, the nutrition pump is a sterile disposable device that is integratable with the pneumatics of the present teachings. In an aspect, the nutrition pump runs closed loop glucose control.

In some configurations, a low bolus, high accuracy infusion pump is used to enable clinical infusions such as prescription vasodilators or insulin. In some configurations, multiple infusion pumps are used to enable multiple different substances to be infused, possibly simultaneously. In some configurations, the pump reservoir is 3 mL, the pump accommodates an infusion rate of 0.5-300.0 µL/hr, an infusion volume of 0.5-250.0 µL, and infuses into the perfusate reservoir.

In some configurations, when the tissue is a kidney, the replenishment ingredients can include, for example, but are not limited to, a plurality of infusion solutions. The infusion solutions can include, but are not limited to including, an isotonic crystalloid/dextran solution, and a buffer solution. The isotonic crystalloid/dextran solution can include isotonic crystalloid with 0.026 g/mL dextran, a complex polysaccharide derived from the condensation of glucose. During replenishment, the system includes a means for maintaining a target glucose range of 100-150 mg/dL, and a basal flow of 10 mL every 15 minutes. These targets, if met, deliver 25 g of Dextran/day, and 960 mL of perfusate replenishment. The time between doses can be adjusted to achieve the target. Depending upon the sensed glucose reading, insulin can be added. The buffer solution is used to regulate the pH of the perfusate. Target pH can include the range of 6.9-7.9. In some configurations, the system includes a means for flushing the kidney with a high-flow, low-potassium preservation solution. In some configurations, the system includes a means for re-perfusing the kidney and monitoring the characteristics of the kidney to determine if the infusion is maintaining the viability of the kidney. Possible kidney nutrition can include, for example, but not limited to, albumin, saline, adenine, glucose, and mannitol, creatinine, MgSO₄, calcium gluconate, insulin, and dexamethasone.

The system of the present teachings includes a means for thermal control of the perfusate, and for the tissue itself. In some configurations, maintaining the tissue at a desired temperature includes selecting a temperature regulation option that meets weight, power, and size requirements. Possible options can include, but are not limited to including, thermodynamic heat engine, phase change, and thermoelectric systems. In some configurations, the heat load is 10-20 W to maintain a 20°C difference in temperature between the environment and the tissue, and smaller if the tissue is maintained at subnormothermic temperatures. For heat loads on the higher side of the 10-20 W range, a thermodynamic heat engine can be selected. For systems in which the size of a battery, if present, could be important, thermoelectric systems can be selected because they can be scaled. When the tissue enclosure is to be placed in closed environment, phase change material systems can be selected because they can store and release heat produced and consumed within the closed environment. Maintaining the tissue at a desired temperature can include selecting appropriate insulation. In some configurations, vacuum panels, aerogels, and/or closed-cell rigid insulation systems can be selected.

In some configurations, temperature of the perfusate is controlled through a heat exchanger. The heat exchanger can optionally include a source of thermal energy, a surface having at least one channel holding the perfusate, a membrane covering the surface and conducting thermal energy from the source through the membrane to the perfusate, and a thermal transfer plate between the membrane and the source. The at least one channel can include a serpentine flow path that rests upon a thermally-conductive and reflective membrane. In some configurations, the thermal transfer plate includes cartridge elements for active control of the temperature of the perfusate. The system includes temperature sensors that sense the temperature of the perfusate as it enters and exits a serpentine fluid path. Active control of the temperature can maintain the temperature needed for tissue perfusion, for example, in the 3°-42° C range. The number and size of the cartridge elements is based at least on the characteristics needed to maintain uniform distribution across the serpentine path. The size of the thermal control plate is dictated by, for example, but not limited to, the number and size of the cartridges and the capacity and geometry of the tissue reservoir. The width of the serpentine channels is based on the need to maintain adequate surface area inside the channels, to avoid stagnation, to avoid substantial pressure loss, and to maintain uniform heat transfer. The geometry of the serpentine channels can be important to prevent stagnation and to prevent turbulence.

The system can optionally include a first of at least one thermal sensor monitoring a perfusate temperature before the perfusate enters the thermal management subsystem, a second of the at least one thermal sensor monitoring the perfusate temperature of the perfusate after the perfusate exits the thermal management subsystem, and a third of the at least one thermal sensor monitoring the perfusate temperature of the perfusate in the fluid reservoir.

The heat exchanger can optionally include a plate having a first side etched with a fluid path and a second opposing side, the second opposing side positioned against the tissue reservoir, and a thermally-conductive membrane having a first membrane side covering the first side, the thermally-conductive membrane having a second opposing membrane side positioned against the thermal energy source.

The system of the present teachings includes a gas management subsystem adjusting gas saturation in the perfusate. The gas management subsystem can optionally include at least one oxygenator supplying oxygen to the perfusate and managing carbon dioxide levels, and at least one gas supplying device providing at least one gas to the perfusate. The at least one gas can optionally include oxygen, nitrogen, and carbon dioxide. Before the perfusate enters the oxygenator from the perfusion pump, the pressure exerted by the perfusate exiting the pump is measured. The controller adjusts the perfusion pump pressure based on the measured pressure information and on the needs of the tissue. The oxygenator adjusts the gas levels in the perfusate as the pump moves the perfusate through the oxygenator. Based on, for example, measured pH, dissolved oxygen, and blood oxygen saturation level, the controller creates a mixture of gases that can adjust characteristics such as pH and dissolved oxygen in the perfusate. The controller interfaces with a mass flow controller, for example, to direct the gas mixture to flow through the oxygenator. In an exemplary configuration, air is removed from the perfusate by an in-line air trap in which air bubbles float to the top of the incoming perfusate, and fluid exits from the non-air section of the air trap.

The method of the present teachings can include, but is not limited to including, mounting the tissue on the tissue platform, positioning it for perfusion. The method can include coupling the tissue's orifices with pre-selected locations on the platform through tubing, connectors, and the like. For example, if the platform is configured for a kidney, the platform can include a connector and tubing to transport perfusate into the kidney and another connector and tubing to transport urine out of the kidney. The method can include directing the venous output into the perfusate reservoir. The vein can be cannulated and directed by tubing to the fluid reservoir, or can simply exit the kidney and pass through a cavity in the platform to the perfusate reservoir. In an exemplary configuration, the artery and the ureter can be cannulated, and the cannulation tubing can be fed through protrusions on the platform that can prevent movement of the tubing on its way to the platform orifices and connectors.

The method can include coupling the platform connectors to the perfusion system and securing the platform into place above perfusate in the perfusate reservoir. The perfusate tank can include space for perfusate below the platform. Into this fluid can flow the output from the tissue mounted on the platform. For example, if the tissue is a kidney, the output is venous perfusate and urine.

The method can include measuring the output from the tissue. The perfusate pumped into the tissue artery can pass through the tissue and exit, at least in part, through the tissue vein and can flow into the perfusate reservoir. The method can include recirculating perfusate from the perfusate reservoir back into the tissue artery. The perfusate can include, but is not limited to including, oxygen carriers such as, for example, but not limited to, perfluorocarbons, hemoglobin-based perfusates, and sea worm hemoglobin-based perfusates. Hemoglobin-based oxygen carriers can include infusible oxygen-carrying perfusates prepared from purified human or animal hemoglobin. The perfusate can include a combination of electrolytes, carbohydrates, vitamins, proteins, prescription drugs, and pH buffer. The method can include monitoring and regulating the temperature of the perfusate prior to pumping the perfusate into the tissue. In some configurations, the temperature can be regulated to room temperature. In some configurations, the temperature can be regulated to body temperature. In some configurations, the temperature can be regulated to a range of 3-42°C. Normal tissue handling procedures in the system and through the method of the present teachings protect the tissue from extreme temperatures over an extended period of time. When maintaining the tissue at a hypothermic level, the target temperature includes the range of 3-10°C. When maintaining the tissue at a sub-normothermic level, the target temperature includes the range of 18.5-25.5°C. When maintaining the tissue at a normothermic level, the target temperature includes the range of 32-42°C.

The method can include pumping air into an oxygen concentration device to supply oxygen to the perfusate. Mass flow controllers (MFCs) establish stable gas flow by controlling mass flow and pressure for pneumatic pump control, and for supplying a gas mixture to the perfusate. In an aspect, oxygen is controlled to maintain a desired hemoglobin oxygen saturation or partial pressure of oxygen. In an aspect, carbon dioxide is controlled to maintain a desired partial pressure of carbon dioxide or pH. In an aspect, nitrogen is controlled to balance. In an aspect, target ranges for dissolved oxygen include 74-160 mmHg arterial and 30-40 mmHg venous. In an aspect, target ranges for dissolved oxygen include 74-500 mmHg arterial and 30-500 mmHg venous. In an aspect, the system can help rehabilitate tissue operation as needed, with levels up to 760 mmHg. In an aspect, the target ranges for both arterial and venous dissolved oxygen include 300-500 mmHg in the case of no additional oxygen available, or to ensure extra oxygen is available.
The target range of dissolved carbon dioxide includes 35-45 mmHg. The method can include replenishing of fluids, electrolytes, nutrients, and other biological compounds necessary to maintain tissue health. In some configurations, an infusion pump is used to provide the replenishment of fluids into perfusate reservoir at a flow rate of 1-20 mL/min. In an aspect, urine is collected from the kidney, the urine's conductivity is monitored, the conductivity is correlated to electrolyte composition, and makeup fluid is delivered via two nutrition pumps. In an aspect, various electrolytes in the urine are measured, each requiring specific adjustments. The method can include monitoring the vitality of the tissue through monitoring the status of, for example, but not limited to, tissue resistance changes (pressure/flow), oxygen consumption, and pH. Monitoring of tissue characteristics provides an indication of the health of the tissue.

The system of the present teachings includes a combination of disposable and durable materials. For example, the oxygenation means is disposable, along with the heat exchanger, while the thermal energy source is durable. The at least one perfusion pump is disposable, while the at least one pump interface coupling the at least one disposable pump with the pneumatics is durable. The at least one infusion pump is disposable. The pneumatics can optionally include at least one durable valve, at least one durable chamber, at least one durable pressure source, and at least one durable vacuum source. Durable components can include at least one sensor providing sensor data monitoring the tissue, and at least one controller receiving and processing the sensor data. Disposable components can include spot sensors, tubing, cassette pumps, tissue containers, and the oxygenator.

### BRIEF DESCRIPTION OF THE DRAWINGS

The foregoing features of the disclosure will be more readily understood by reference to the following description, taken with reference to the accompanying drawings, in which:
FIGs. 1A-1F are schematic block diagrams of the system of the present teachings for maintaining and assessing tissue;
FIGs. 2A-2I are schematic perspective, elevations, and top/bottom/side views of a configuration of the system of the present teachings;
FIGs. 3A-3C are schematic perspective diagrams of durable components of the configuration depicted in FIG. 2A;
FIG. 3D is a schematic block diagram of a configuration of the output monitoring sensor system of the present teachings;
FIGs. 4A-4C are schematic perspective diagrams of disposable components of the configuration depicted in FIG. 2A;
FIGs. 5A-5E are schematic perspective diagrams of the disposable portions of the infusion pump of the configuration depicted in FIG. 2A;
FIG. 6 is a schematic perspective diagram of the pneumatic assembly controlling the pumping of the configuration depicted in FIG. 2A;
FIG. 7 is a schematic top-down diagram of the pneumatic assembly of the configuration depicted in FIG. 2A;
FIG. 8 is a schematic diagram of a view of the electronics layout of the configuration depicted in FIG. 2A;
FIGs. 9A-9C are schematic perspective, elevation, and top/bottom/side views of the container hood and barrier heating assembly of the configuration depicted in FIG. 2A;
FIGs. 10A-10K are schematic perspective, elevation, and top/bottom/side views of the tissue container assembly and mounting mechanism of the configuration depicted in FIG. 2A;
FIGs. 11A-11F are schematic perspective and top views of the tissue container tank thermal adjustment assembly of the configuration depicted in FIG. 2A;
FIG. 12 is a perspective diagram of the tissue strap of the configuration depicted in FIG. 2A;
FIGs. 13A-13C are schematic perspective and exploded diagrams of a second aspect of the tissue container tank assembly of the configuration depicted in FIG. 2A;
FIGs. 14A-14C are schematic perspective and exploded diagrams of a second aspect of the tissue container assembly of the configuration depicted in FIG. 2A; and
FIG. 15 is a perspective diagram of a second aspect of the hood assembly of the configuration depicted in FIG. 2A.

### DETAILED DESCRIPTION

The system of the present teachings for maintaining, assessing, maturing, and rehabilitating tissue is described in detail herein. Specifically, the system and method of the present teachings is configured to allow for real-time assessment of the tissue, using that assessment to continuously maintain the health of the tissue. The system of the present teachings includes, but is not limited to including, a disposable set of components and a durable set of components. The disposable components include, but are not limited to including, a tissue container assembly holding the tissue and a reservoir of perfusate, a perfusion pump assembly pumping perfusate through the tissue, tubing connecting the tissue container assembly with the perfusion pump assembly, a tissue gas adjustment device maintaining a myriad of characteristics of the perfusate, and sensors providing data about the tissue necessary to maintain the tissue. Disposable components can also include at least one infusion pump assembly providing nutrition and medication to the tissue, and an output monitoring, measuring, and sampling assembly receiving output from the tissue, assessing the output in real-time and possibly off-line, and returning the output to the tissue container perfusate reservoir. The durable components include, but are not limited to including, a tank monitor assembly enabling protection of the tissue from environmental contamination as well as visual inspection and sensory recording of the tissue, a thermal adjustment assembly maintaining the temperature of the perfusate, a pneumatics assembly driving the perfusion pump assembly to circulate the perfusate, power, data, and control electronics energizing the components of the system and sequencing events in the system based at least on sensor data.

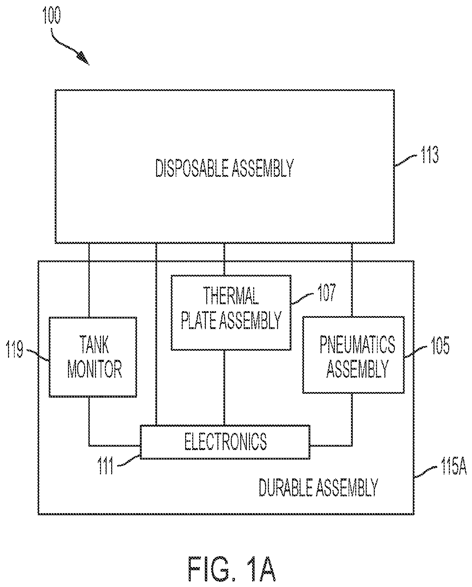

Referring now to FIGs. 1A-1E, various configurations of the system of the present teachings are illustrated in block diagram form. All exemplary configurations include durable and disposable assemblies. The present teachings contemplate further configurations than those depicted herein. The drawings in FIGs. 1A-1E are for illustration purposes only. In an aspect, system 100 FIG. 1A) of the present teachings includes durable assembly 115A (FIG. 1A) and disposable assembly 113 (FIGs. 1A-1D). Disposable assembly 113 (FIGs. 1A-1D) includes a container or tank that houses the tissue that is to be maintained and assessed. The container, while being operably coupled with durable assembly 115A (FIG. 1A), protects the enclosed tissue and fluids nourishing and medicating the tissue from environmental contamination. Durable assembly 115A (FIG. 1A) includes tank monitor 119 (FIGs. 1A-1D), electronics 111 (FIGs. 1 A-1D), thermal adjustment assembly 107 (FIGs. 1A-1D), and pneumatics assembly 105 (FIGs. 1A-1D). Tank monitor 119 (FIGs. 1A-1D) includes at least one sensor that can capture and retain data about the tissue resting in disposable assembly 113. Tank monitor 119 (FIGs. 1A-1D) includes, for example, a transparent barrier that can at once enable inspection of the tissue while at the same time protecting the tissue from environmental contamination. The barrier can be completely transparent to all frequencies, or completely transparent to some frequencies and opaque to others. Parts of the barrier can be opaque, while others can be transparent. Inspection can be performed manually, manually enabled by sensors, partially automatic, or completely automatic through controller-enabled sensors. Sensors can include, but are not limited to including, cameras and x-rays, and remote probes that monitor temperature, humidity, light, pressure, flow rate, air quality, and differential air pressure, for example. Electronics 111 (FIGs. 1A-1D) include a controller that manages various activities with respect to the sensors, for example, collecting, displaying, analyzing, and storing data from the sensors. Thermal adjustment assembly 107 (FIGs. 1A-1D) maintains a desired temperature within disposable assembly 113 (FIGs. 1A-1D), providing thermal regulation for a perfusate that is used to nourish and medicate the tissue without the thermal adjustment assembly 107 coming into contact with the tissue. Moving perfusate, nutrition, and medication to and through the tissue in enabled by pneumatics assembly 105 (FIGs. 1A-1D) which drives at least one disposable pump. Other methods to drive the pump(s) are contemplated by the present teachings. Pumps in the system of the present teachings have delivery requirements. These requirements establish characteristics that are desired by any device that drives the pumps. In an aspect, a pneumatic valve assembly can deliver the quantities required without damaging the traversing fluid.

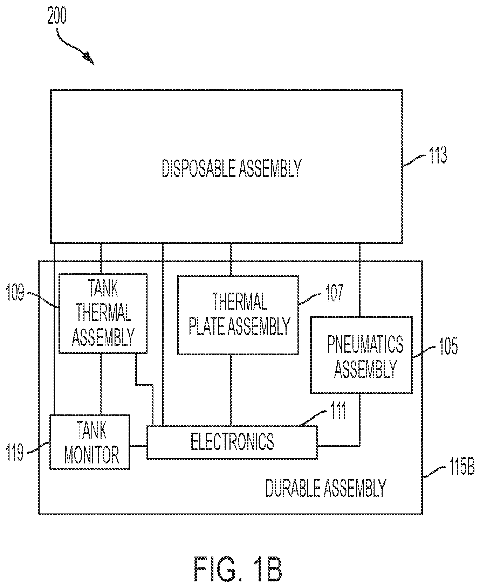

Referring now to FIG.1B, exemplary system 200 includes durable assembly 115B which includes tank thermal adjustment assembly 109. In such a configuration, tank thermal adjustment assembly 109 insulates the tank and provides thermal control of the tank. The purpose of the assembly is to substantially prevent condensation from adhering to the tank. Condensation on the tank can affect the monitoring of the tissue, and can be indicative of a condensation/vaporization cycle that causes the tissue to lose moisture or causes the tissue surface to dry out, which can impact the viability of the tissue. Insulating the tank can reduce condensation, and thermal control can reduce condensation as well.

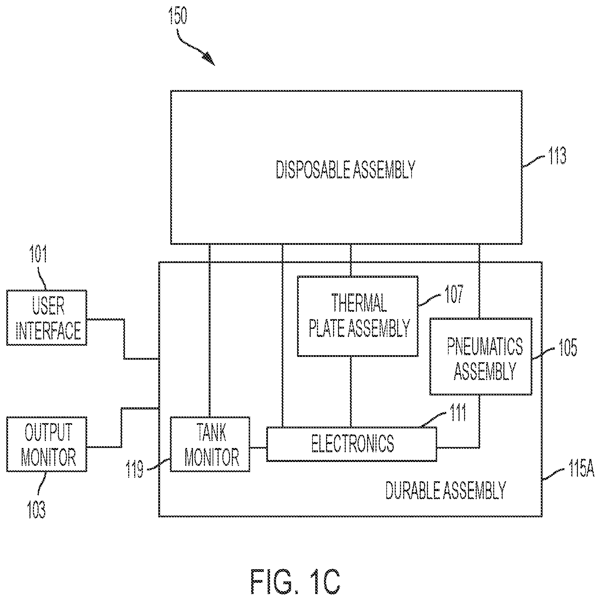

Referring now to FIG. 1C, exemplary system 150 includes user interface 101 and output monitor 103. In such a configuration, the sensor data gathered by sensors in durable assembly 115C and disposable assembly 113 can be made available to a user through user interface 101. Possible user interface options include wired and wireless devices, devices with and without visual interface, audio interface, and tactile interface, and/or a combination of interfaces. For example, a computer monitor can display a read-out of sensor data gathered with regard to the tissue, and can be coupled with a keyboard in which the user can request types of data and/or control the sequencing of events occurring with respect to the tissue. The user interface can be used to entirely or partially override any automatic behavior that the system takes to maintain the tissue, or augment such behavior. Changes in the tissue over time can be graphically depicted, either by tables of tissue characteristics as they change over time, graphical depictions of such data, photographs and/or videos of the tissue at various check points or continuously, an audio report of the tissue, and/or a tactile read-out of the situation. Data can be analyzed and logged, and the user and/or system can retrieve the analyzed data. Output monitor 103 enables collecting output from the tissue, measuring it, inspecting it, and routing it based on automatic and/or manual selections. Output monitor 103 includes a vial or collection bag into which tissue output is routed by, for example, tubing cannulated to an orifice of the tissue, for example, a ureter if the tissue is a kidney. Other types of routing of the output are contemplated by the present teachings. In any case, the tissue enclosure is properly sealed from environmental contaminants even as the output travels from inside the enclosure to a collection point outside the enclosure. Connectors that provide for environmental isolation and a closed circulation path maintain the desired protection from contaminants. The output travels to a collection point in which the output can be measured, assessed, and released. The collection point can allow for assessment including manual visual inspection, through fully automatic multi-sensor assessment, and all types of inspection and assessment in between. For example, the user can visually inspect urine if the collection point is configured as a transparent or semi-transparent container, if the tissue is a kidney, and manually adjust parameters that can bring the urine back to a healthy appearance. Likewise, sensors can automatically deliver data about the urine to the controller, and the controller can adjust parameters automatically that affect the health of the kidney. In an aspect, the collection point includes at least one incoming fluid path that admits output from the tissue into the collection point. In an aspect, the collection point includes a means for detecting the volume of output. When a pre-selected amount of output is collected, the amount is measured and released through at least one outgoing fluid path. In an aspect, the means for detecting volume includes at least one level sensor coupled with at least one valve controlled by the controller. In an aspect, the controller receives a signal when a level sensor detects that the fluid has reached a pre-selected level in the collection device. In an aspect, the controller activates sensor(s) to examine the collection of output. When the examination is complete, the controller opens at least one valve and releases the output. The controller discontinues the release by closing the valve when a level sensor detects that the fluid has reached a pre-selected level in the collection device. Other means for measuring the level of output are contemplated by the present teachings. The output can be released to at least one reservoir. In an aspect, the output can be released to a reservoir selected by the controller. In an aspect, a single outgoing output path can be routed through a multi-path connector. In an aspect, one path can route the fluid into the tissue container to join with the reservoir of perfusate. In an aspect, one path can route the fluid into a waste reservoir that can be removed and deposited in an appropriate receptacle. In an aspect, one path can route the fluid into a sample reservoir that can be removed and assessed offline. Other output paths are contemplated by the present teachings.

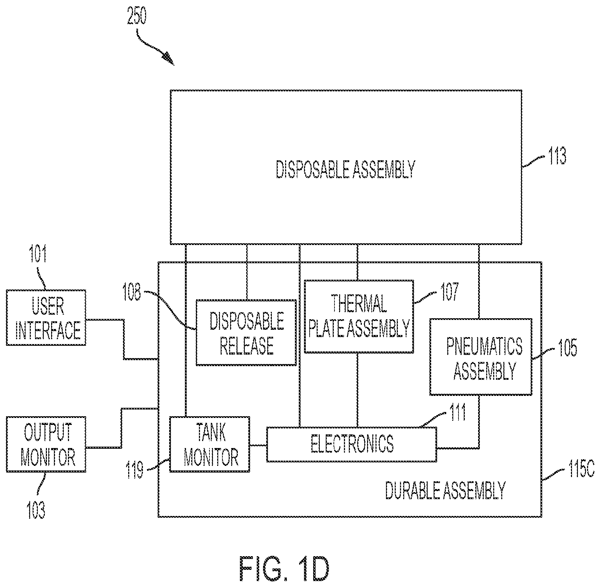

Referring now to FIG. 1D, durable assembly 115C of exemplary system 250 can include disposable release 108. In an aspect, disposable assembly 113 can be completely decoupled from durable assembly 115C by (1) aligning complementary fittings, such as between durable pneumatic assembly 105 and the disposable pumps controlled by pneumatic assembly 105, and (2) engaging a mechanism that enables secure coupling between the disposable and durable assemblies. In an aspect, the mechanism includes at least one tapered locking shaft coupled with at least one disposable locking carriage. The locking carriage locks disposable assembly 113 in place by sliding across the locking shaft until a spring plunger is cleared. To decouple disposable assembly 113 from durable assembly 115C, the spring plunger is released. Other means of coupling durable and disposable assemblies are contemplated by the present teachings.

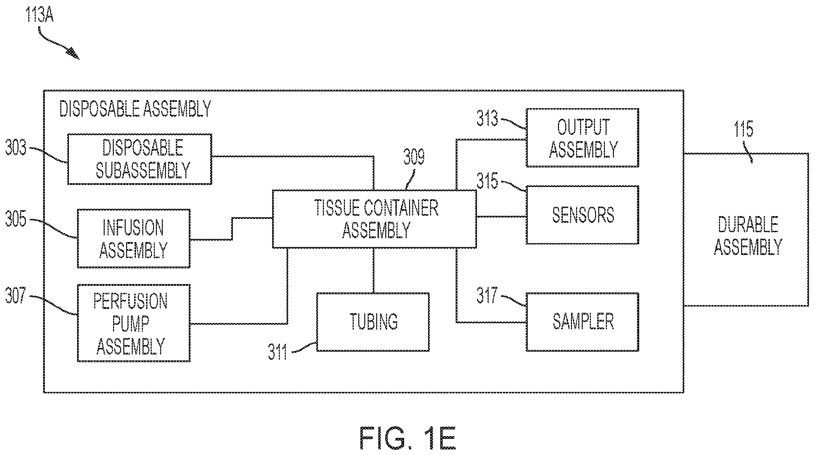

Referring now to FIG. 1E, disposable assembly 113A includes components that have direct contact with the tissue, and/or the perfusate, and/or nutrients and/or medications. These components can include, but aren't limited to including, a tissue container, pumps that enable the flow of perfusate, medications, and nutrition, tubing, sensors, and sampling/assessments containers. In an aspect, disposable assembly 113A includes disposable subassembly 303, infusion assembly 305, perfusion pump assembly 307, tissue container assembly 309, tubing 311, output assembly 313, sensors 315, and sampler 317. In an aspect, pneumatic infusion assembly 305 drives perfusion pump assembly 307, to deliver medications and nutrition to the perfusate. In an aspect, nutrition can be delivered by one pneumatic infusion pump while medication can be delivered by another pneumatic infusion pump. In an aspect, the pneumatic infusion pumps are controlled by a controller. In an aspect, medications and/or nutrition can be delivered by a stand-alone, remotely-operated pump that is not associated with the pneumatic system. Pump choices depend upon the desired delivery rate and other factors associated with the delivered product. In an aspect, the infusion pump can include a cassette pump designed to deliver infusion materials according to desired flow rates and pressures. Perfusion pump assembly 307 includes at least one perfusion pump. In an aspect, the perfusion pump enables the flow of perfusate to and through the tissue. In an aspect, the perfusion pump can include one or more cassette pumps. Other types of pumps are contemplated by the present teachings. In an aspect, tissue container assembly 309 includes a removable tissue platform isolating the tissue from a reservoir of perfusate. In an aspect, the removable tissue platform enables coupling of the tissue with input and output fluid paths. The tissue platform enables initial cannulation of the tissue, as the cannulation can be done away from the perfusion system, and then the tissue and platform are brought to the perfusion system and simply plugged in. The tissue platform enables positioning and securing the tissue by removable fittings. In this way, de-cannulating is not required when the tissue is ready to be removed for transplant, the tissue platform fittings can simply be decoupled from the tissue container. Tissue container assembly 309 includes sample ports and various disposable sensors. Tissue container assembly 309 includes a perfusate reservoir. In an aspect, the reservoir is replenished by output from the tissue, nutrients, and medications. Replenishment occurs based on the volume of output discarded, if any. Tubing 311 connects the various parts of disposable assembly 113A to each other through tubes and appropriate connectors to form a closed loop and avoid environmental contamination. Output assembly 313 includes at least one vial to hold the output as it is measured and evaluated as described herein. The vial can be transparent for visual evaluation of the output. Disposable sensors 315 can include sensors that come into contact with the tissue and/or the perfusate. Sampler 317 receives output from the tissue to make the output available for online or offline sampling. Disposable subassembly 303 includes components such as, for example, but not limited to, an oxygenator, a hood mount, and a tissue strap. The oxygenator provides oxygen to the perfusate. The hood mount provides a surface for an environmental barrier to be coupled with the tissue container. The tissue strap maintains the position of the tissue on the tissue platform.

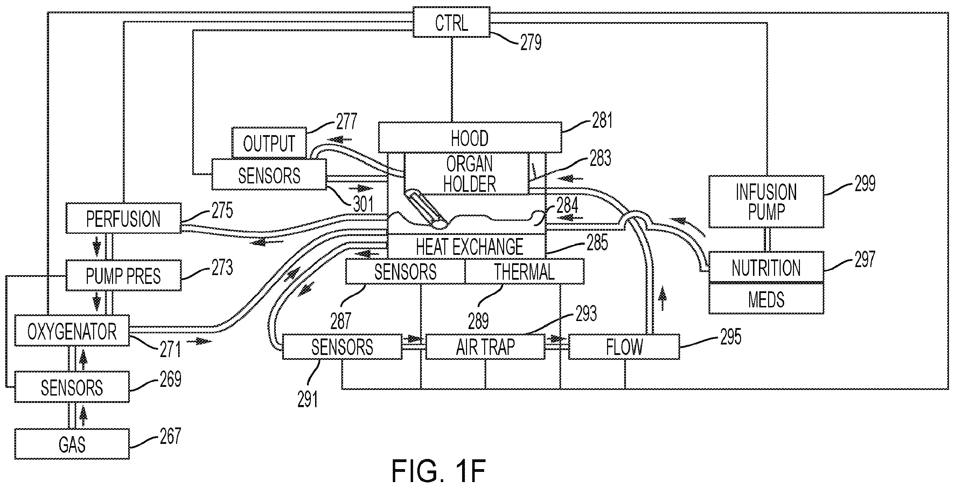

Referring now to FIG. 1F, the flow and data/control/electrical connections of an exemplary configuration of the system of the present teachings is shown. In an aspect, controller 279 controls the sequencing of events that move the perfusate, medications, and nutrition from point to point. Starting with perfusate reservoir 284, perfusate flows into and through perfusion pump 275. The pressure of the perfusate is then measured inline by pump pressure sensor 273 before the perfusate enters oxygenator 271. Oxygenated perfusate flows into heat exchanger 285 in which the perfusate temperature is adjusted to a desired level and then is assessed by inline sensors 291. Bubbles are removed by air trap 293 and inline flow rate is measured by flow meter 295. Oxygenated, de-bubbled, and thermally-adjusted perfusate is pumped into the tissue in tissue holder 283 through connectors to which the tissue is attached. The tissue processes the perfusate by producing output. Some of the output exits the tissue by orifices in the tissue itself, for example, the ureter in a kidney, and some fluid becomes available based on the process. The output that exits the tissue through a tissue orifice is pumped to an output assembly as described herein. In an aspect, the other output fluid follows a fluid ramp into reservoir 284. The fluid ramp enables a gentle landing of the output fluid into reservoir 284 to avoid damage to the contents of the perfusate. The loop continues with the perfusate pumped into perfusion pump 275. In an aspect, controller 279 tracks output that is not returned to reservoir 284. An equal amount of perfusate, and nutrition/medications 297 can be added to reservoir 284 by the pumping action of infusion pump 299. In an aspect, the system includes multiple various kinds of infusion pumps, some specific for medication delivery, some specific for nutrition delivery. In an aspect, controller 279 receives data from sensors 287 and activates thermal adjustment 289 based on the data. In an aspect, controller 279 receives data from sensors 291, air trap 293, and flow meter 295, and adjusts the characteristics, flow rate, and possibly flow volume based on those data. In an aspect, an operator can perform manual inspection of data from the sensors and can adjust, for example, but not limited to, medications, nutrition, temperature, flow rate, oxygenation, and flow volume in the perfusate to maintain the viability of the tissue. Sensors collect data about, for example, but not limited to, glucose, dissolved oxygen, temperature, pH, and oxygen saturation.

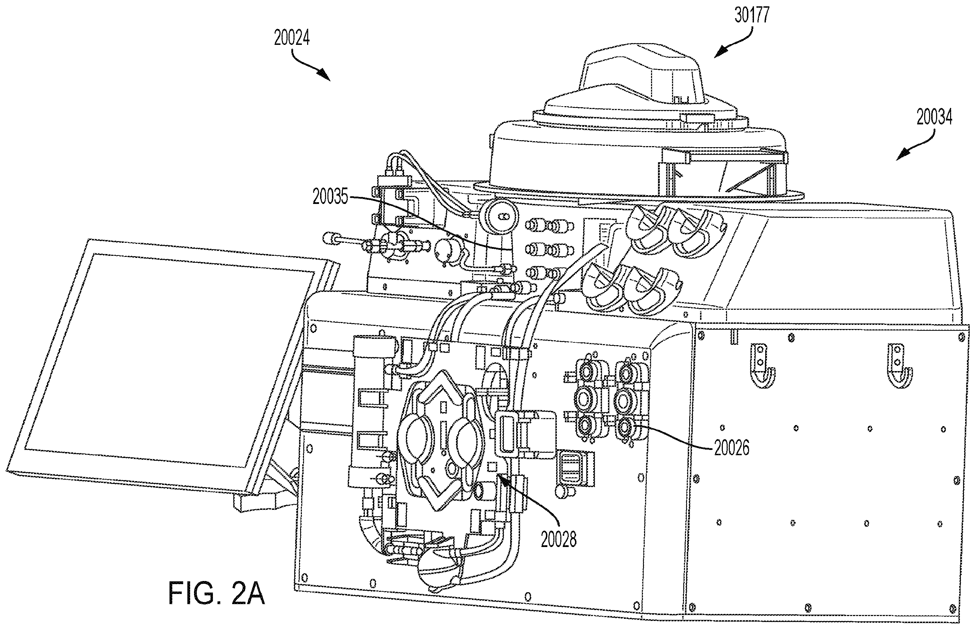

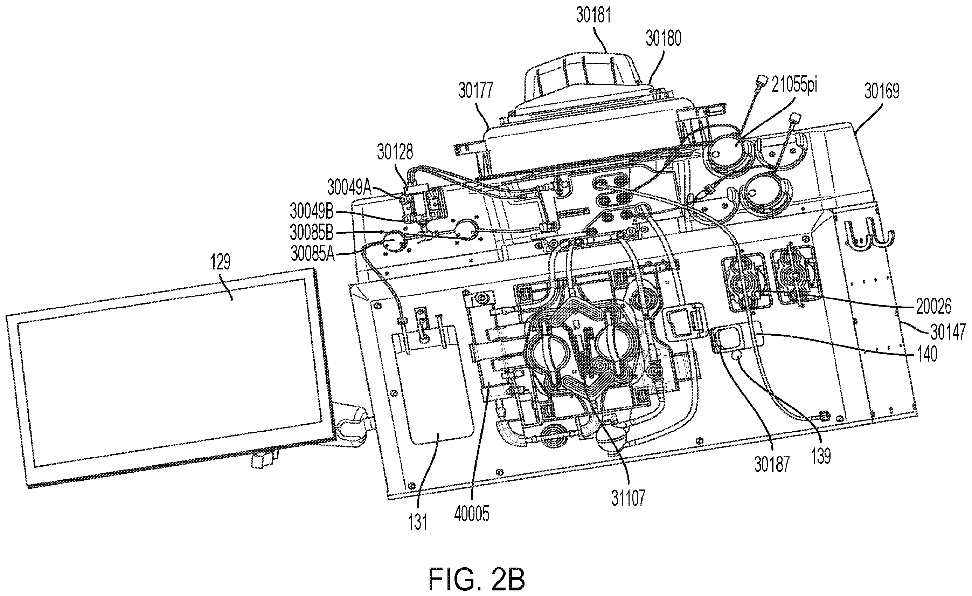

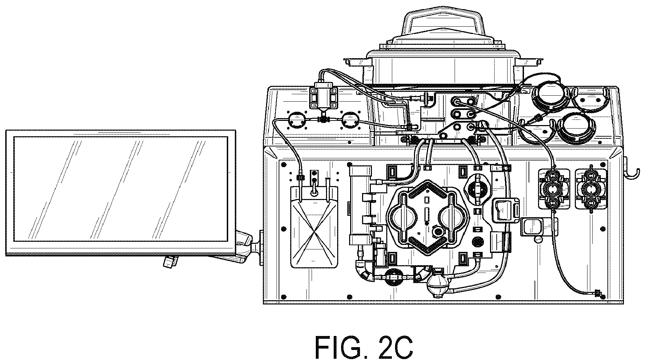

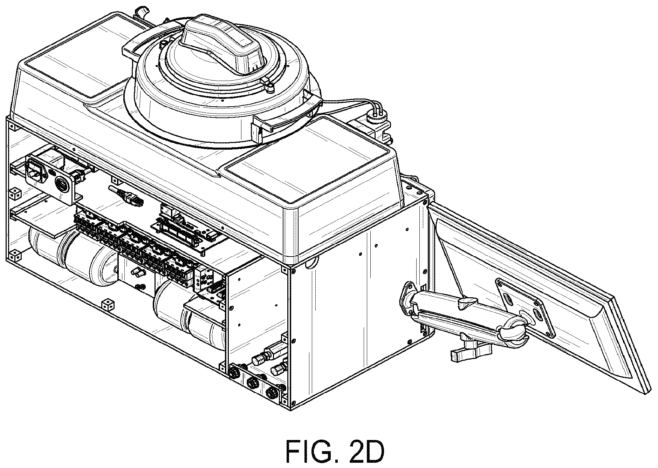

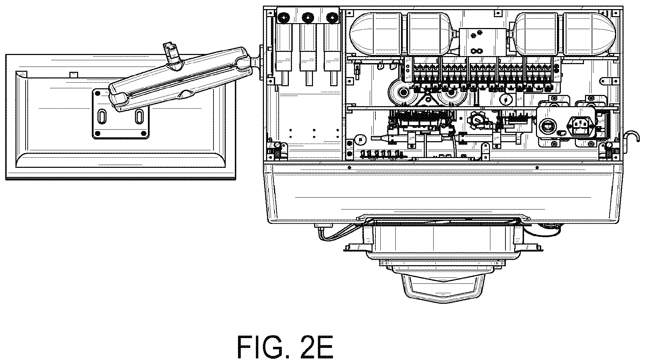

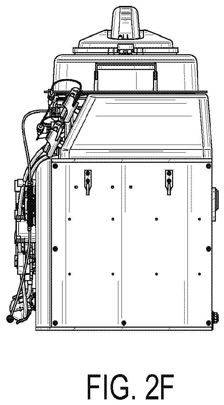

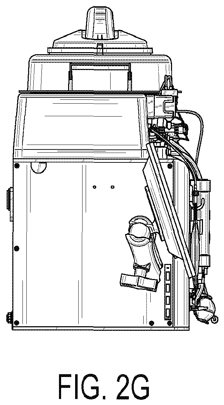

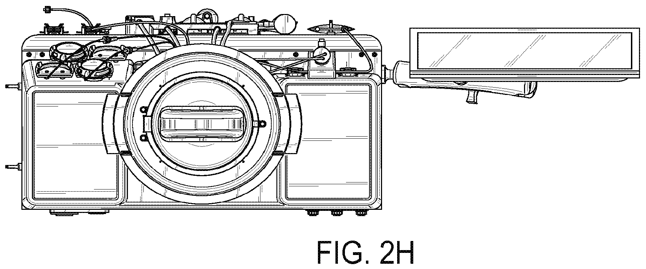

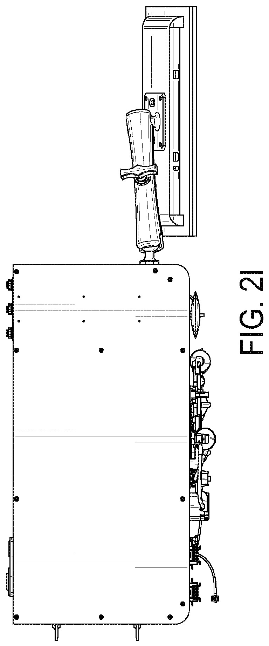

Referring now to FIGs. 2A-2I, various views of exemplary configuration system 20024 of the system of the present teachings are shown. System 20024 includes assemblies and components such as durable enclosure assembly 20034 (FIG. 2A), lid housing 30177, thermal adjustment assembly 20035 (FIG. 2A), disposable assembly 20028 (FIG. 2A), and pneumatic infusion pump assembly 20026, which are described herein in detail. Other components include sensor cover 30181 (FIG. 2B), sensor mount 30180 (FIG. 2B), durable system shell 30169 (FIG. 2B), enclosure plate 30147 (FIG. 2B), locking carriage front 30187 (FIG. 2B), cassette pump component 31107 (FIG. 2B), and output flow chamber 30128 (FIG. 2B). Most components are surrounded by enclosure plates, such as enclosure plate 30147, that form tissue durable system shell 30169. Shell 30169 and lid housing 30177 combine to encase most of the components of the system. Durable assembly 20034 and disposable assembly 20028 are coupled by the interaction of locking carriage 30187 with locking shafts (not shown in FIGs. 2A and 2B) and spring 139 (FIG. 2B). Locking carriage 30187 (FIG. 2B) couples durable assembly 20034 (FIG. 2A) with disposable assembly 20028 (FIG. 2A) when in the position shown in FIG. 2B, i.e. seated to the left in cavity 140 (FIG. 2B). In that position, locking carriage 30187 (FIG. 2B) is held in place by expanded spring 139 (FIG. 2B). Contracting spring 139 (FIG. 2B) releases locking carriage 30187 (FIG. 2B) which travels to the right in cavity 140 (FIG. 2B) and releases the coupling between durable assembly 20034 (FIG. 2A) and disposable assembly 20028 (FIG. 2A).

Continuing to refer to FIGs. 2A-2I, sensor cover 30181 (FIG. 2B) and sensor mount 30180 (FIG. 2B) provide mounting and protective locations for sensors that can monitor the health of the tissue in the tissue container. For example, a camera can be used to continuously monitor the visual aspects of the tissue. Other sensors can monitor the tissue as well, and all can provide the data to a controller. In order for a visual sensor to properly view the tissue, there must be transparency to one or more desired frequencies in the barrier between the durable components (mount and sensor) and the tissue. Further, over time, for the barrier to remain clear, possible reasons for clouding the barrier are addressed in the system. For example, condensation can inhibit transparency. In an aspect, to address the condensation issue, a heating element can be installed in the barrier to reduce condensation. Other ways to address condensation include chemical treatments and insulation.

Continuing to refer to FIGs. 2A-2I, output flow chamber 30128 receives output from the tissue in the tissue container. In an aspect, the t-connector into which the output flows can be used to control flow and retain the output in flow chamber 30128. In an aspect, pinch valves 30085A and 30085B can be closed to retain the output. In any case, the output is retained in chamber 30128 until level sensor 30049A reports that the desired level of output has been reached. That report signals the opening of either or both of the t-connector and/or one or more pinch valves. In the illustrated system, when pinch valve 30085A is open, the output flows into waste reservoir 131. In this case, the controller can signal that replenishment of fluid might be necessary in the amount that was measured in chamber 30128. When pinch valve 30085B is open, the output flows back into the tissue container reservoir (not shown in FIGs. 2A and 2B), forming a closed loop in which no replenishment of the perfusate may be necessary. When level sensor 30049B reports that the output has reached a pre-selected level, release of the output is complete, and the pinch valve(s) is closed. Although two alternatives are shown for output flow, more or fewer alternatives are contemplated by the system of the present teachings. As shown in FIG. 2B, the output exits the tissue container through a tubing connector. Within the tissue container, the tissue, located in a tissue holder which, as described herein, enables cannulating an orifice of the tissue with the fluid connector. For example, the ureter can be cannulated, when positioning the kidney on the tissue holder, using tubing with the fluid connector.

Continuing to refer to FIGs. 2A-2I, an exemplary user interface device in the form of display 129 is shown. Display 129 can be an output-only device or an input/output device, possibly a touch screen. Display 129 can be wired or wireless. Other forms of user interface can enable remote monitoring and operation, for example, but not limited to, handheld devices, laptop computers, desktop computers, and tablets.

Continuing to refer to FIGs. 2A-2I, medications and nutrition, for example, can be infused into the perfusate by at least one of infusion pump assembly 20026. As shown in FIG. 2B, the infused fluids enter the tissue container above the level of the reservoir. The perfusate exits the reservoir near the bottom of the tissue container. The controller sequences events that occur with respect to the infusion pump, and therefore delivers nutrition and medications in a timely manner. In an aspect, pumps 21055pi deliver infusion fluids at rates and volumes that are different from those characteristic of infusion pumps 20026. In an aspect, some or all of the infusion pumps can be controlled separately from each other and from controller-managed pumps, perhaps enabling asynchronous operation with the controller-managed pumps. Advantages of such a configuration include manual override of medication delivery.

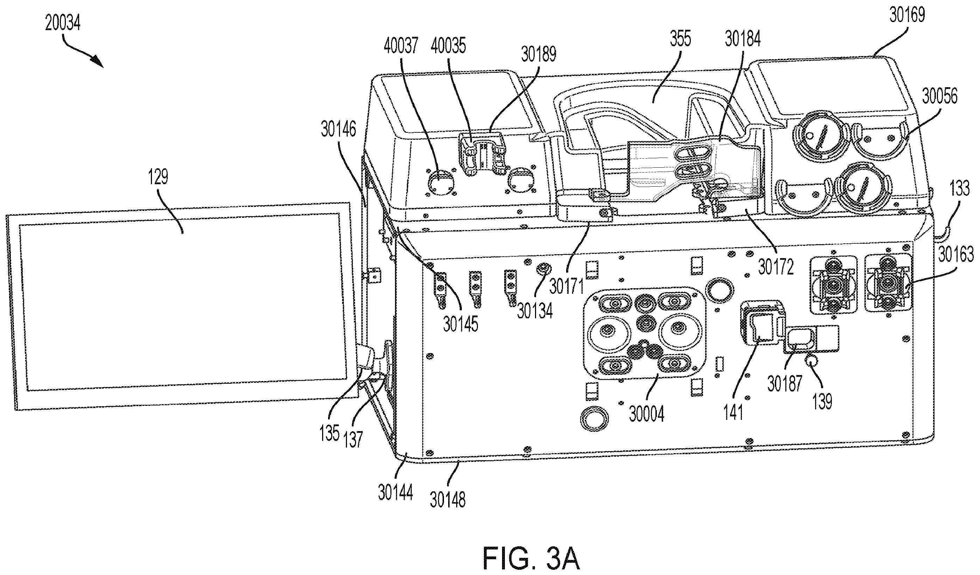

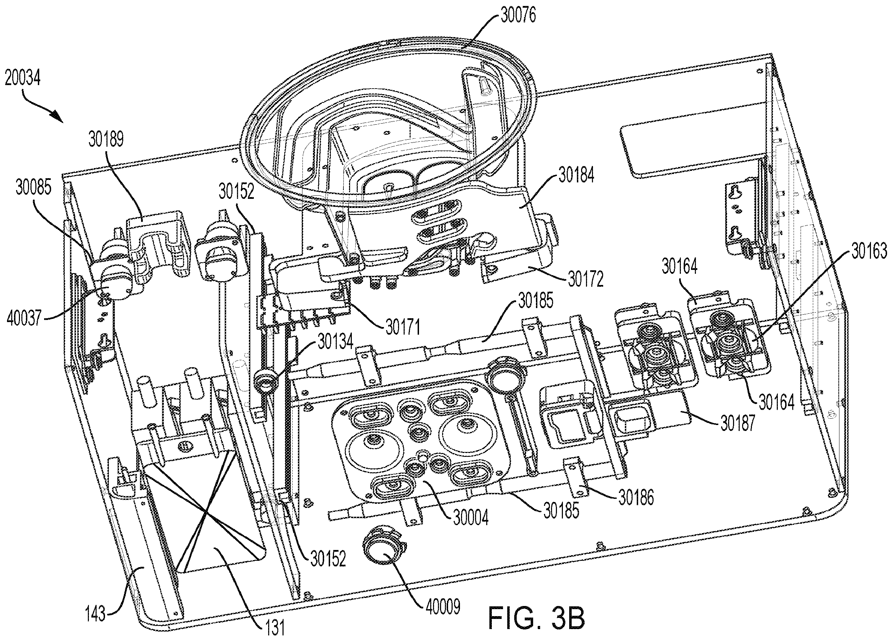

Referring now to FIGs. 3A-3B, components of durable assembly 20034 on the exterior (FIG. 3A) of shell 30169 (FIG. 3A) and the interior (FIG. 3B) of shell 30169 (FIG. 3A) are shown. Enclosure plates 30144, 30145, 30146, and 30148 form parts of surrounding shell 30169 as discussed herein, upon which accessories such as hooks 133 and USB hub mount/monitor mount 143 are mounted. Shell 30169 includes cavity 355 that admits disposable tissue container 30076 (FIG. 3B). Tissue container 30076 (FIG. 3B) is held in place by container shell 30184 and container locking mechanisms 30171 (FIG. 3A) and 30172 (FIG. 3A). Shown in this configuration are output level sensor mounting spacer 30189 upon which level sensors 30049A and 30049B (FIG. 2B) are mounted. Spacer 30189 can be constructed to space the level sensors to accommodate desired level triggers. Spacer 30189 can include adjustable mounting positions for the level sensors 40035, enabling output volume measurements to be adjusted without the need of tools. Durable components can include pinch valves 40037, mounted with pinch valve mounts 30085 (FIG. 3B). Infusion pump mounts 30056 (FIG. 3A) provide fitted slide-in mounting options for infusion pumps 21055pi (FIG. 2B). Various mount geometries, pump sizes and shapes, and number of mounts arc contemplated by the present teachings. Gas fitting 30134 enables gas to flow mass flow controllers into the oxygenator 40005 (FIG. 2B). Pump 31107 (FIG. 2B) couples with pump bracket 30004, which provides the interface between the pneumatics and pump 31107 (FIG. 2B).

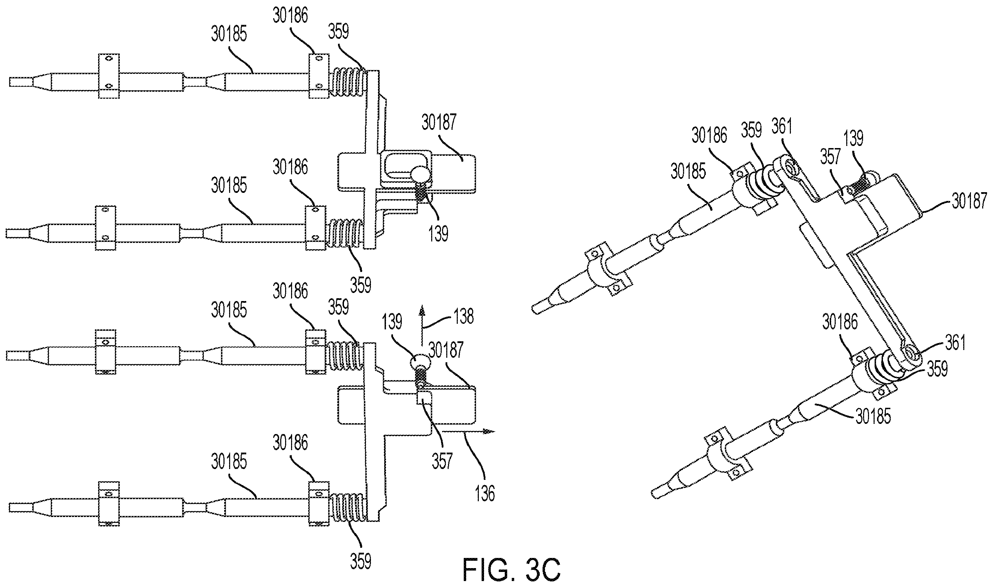

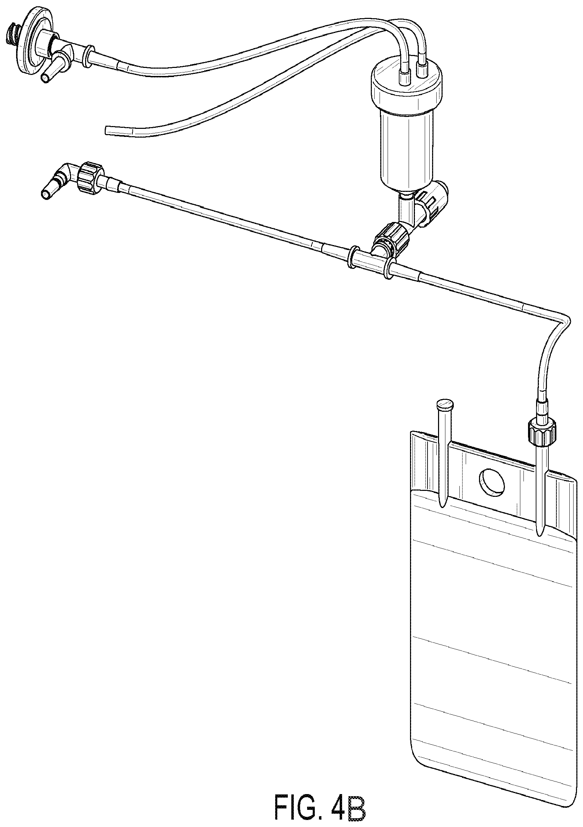

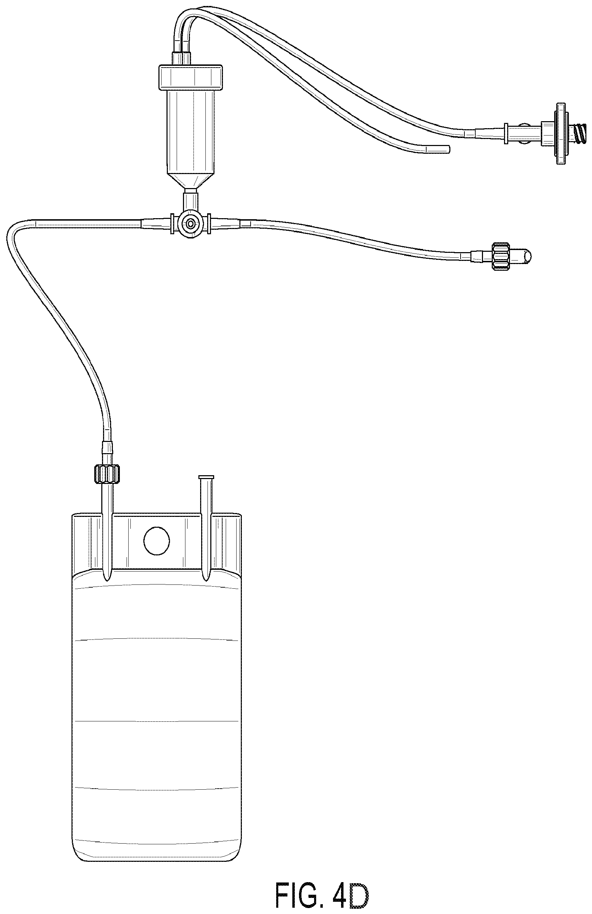

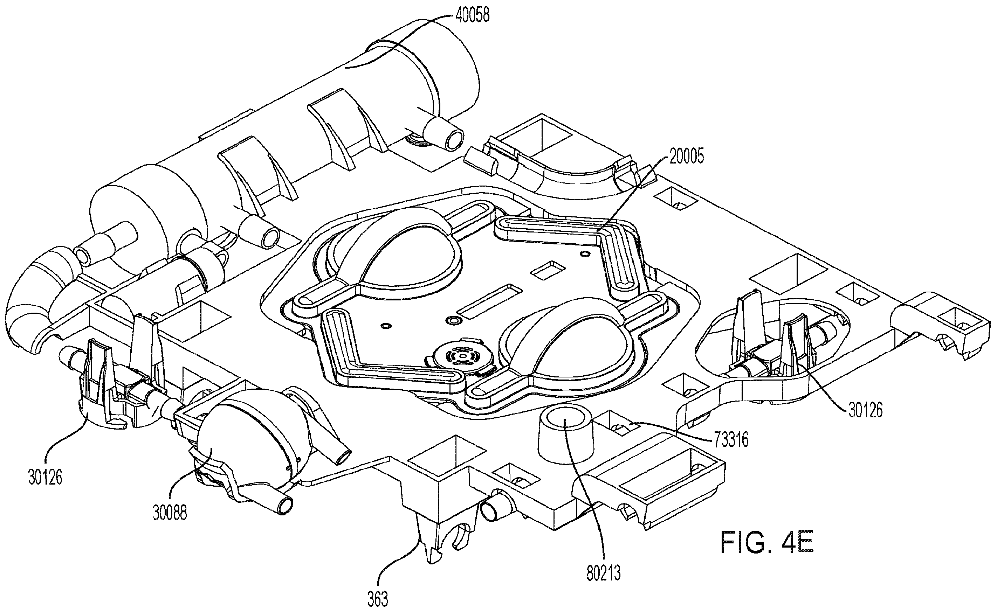

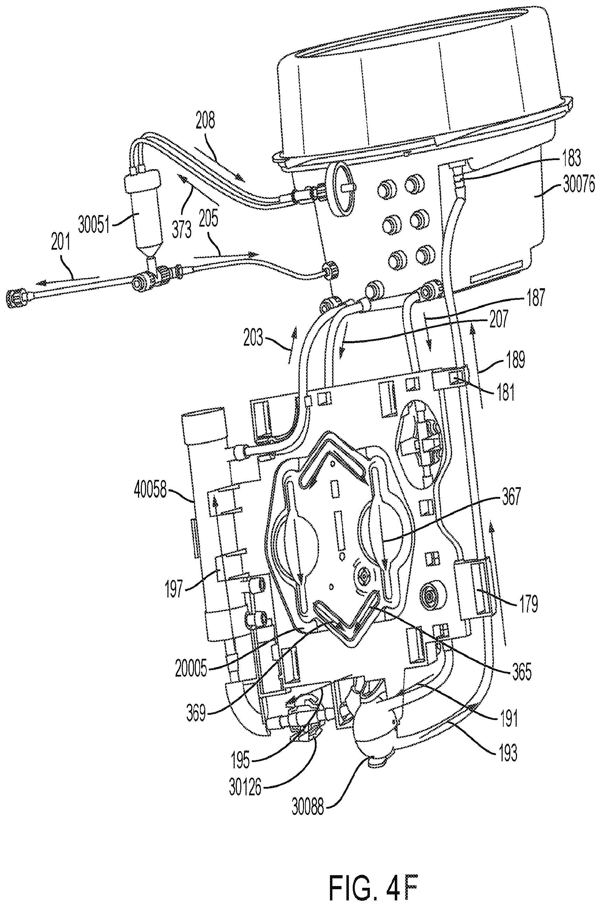

Referring now to FIG. 3C, a secure coupling between pump 31107 (FIG. 2B) and pump bracket 30004 (FIG. 3B) is enabled by locking carriage 30187, spring 139, and locking shafts 30185 (FIG. 3B), as shown in FIG. 3C. Specifically, when spring 139 is in a depressed position as shown, locking carriage 30187 is depressed against shaft springs 359, forcing locking carriage 30187 towards locking shaft guide 30186, depressing shaft springs 359. In this configuration, disposable and durable components are securely engaged, forming an environmental barrier protecting the durable components from perfusate leaks, while allowing disposable and durable components to interact between disposable assembly 20028 (FIG. 2A) and durable assembly 20034 (FIG. 2A). Specifically, locking shafts 30185 rest in locking shaft clamps 363 (FIG. 4B) that are part of disposable assembly 20028 (FIG. 2A), while shaft guides 30186 are mounted upon durable assembly 20034 (FIG. 2A). When spring 139 is extracted as illustrated by arrow 138, locking carriage 30187 is forced away from locking shaft guide 30186, as shown by arrow 136, by shaft spring 359. At this time, durable and disposable assemblies are released from each other. This feature can be used to easily replace disposable components when tissue assessment and maintenance are complete for a particular tissue.

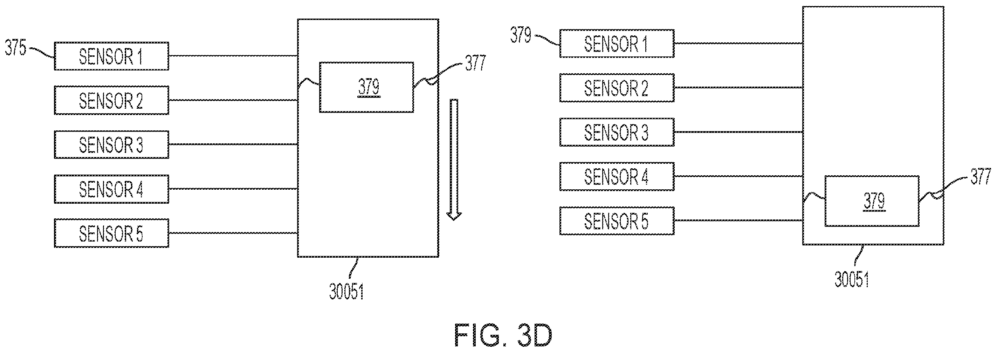

Referring now to FIG. 3D, one possible way to measure the level of output in output container 30051, of many contemplated by the present teachings, includes visual sensors 375 that report the height of float 379 related to the average level of output 377. Shown in FIG. 3D are two different output levels, each of which can trigger input and output valve activity and output characteristics measurements.

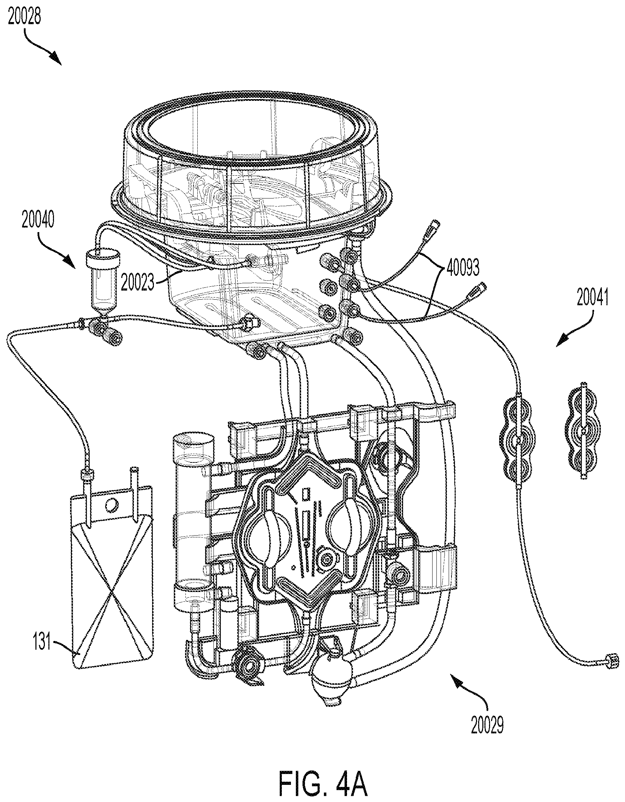

Referring now to FIGs. 4A-4B, disposable assembly 20028 is shown. Disposable assembly 20028 includes, but is not limited to including, tissue container 20023, infusion assembly 20041, and front components subsassembly 20029 including perfusion subassembly, and output monitor assembly 20040. Coupling these parts to form a closed fluid loop is tubing. In an aspect, perfusate is moved through the closed loop by at least one perfusion pump, while nutrition and medication are infused in to the perfusate by at least one infusion pump. In an aspect, a single type of pump is used for both perfusion and infusion. In an aspect, a single pump is used for both perfusion and infusion. In an aspect, the perfusate is moved by at least one first kind of cassette pump and the medications and nutrition are infused by at least one second kind of cassette pump. In an aspect, the medications are infused by a first infusion pump, while the nutrition is infused by a second infusion pump. In an aspect, actions of the at least one perfusion pump and the at least one infusion pump are controlled by a controller. In an aspect, actions of at least one perfusion pump are controlled by a first controller, and actions of the at least one infusion pump are controlled by a second controller. In an aspect, actions of a first at least one infusion pump are controlled by a first controller, and actions by a second at least one infusion pump are controlled by a second controller. In an aspect, the first controller and/or the second controller can be implemented by an application that is remote to the system of the present teachings. In an aspect, tubing 40093 can couple additional pumps to tissue container 20023 to deliver infusion fluids, for example. In an aspect, output monitor 20040 can deliver tissue output to drainbag 131 and/or tissue container 20023, depending upon characteristics of the output.

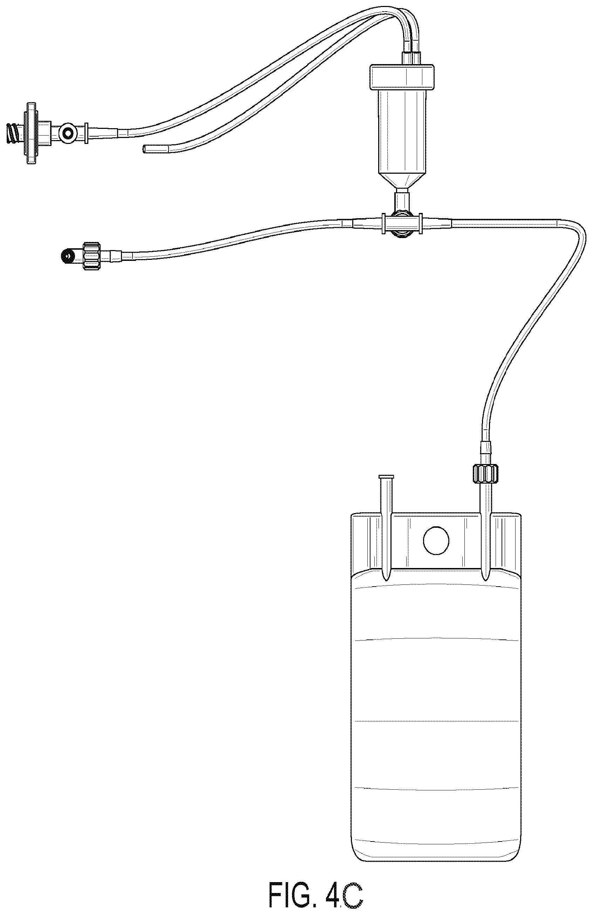

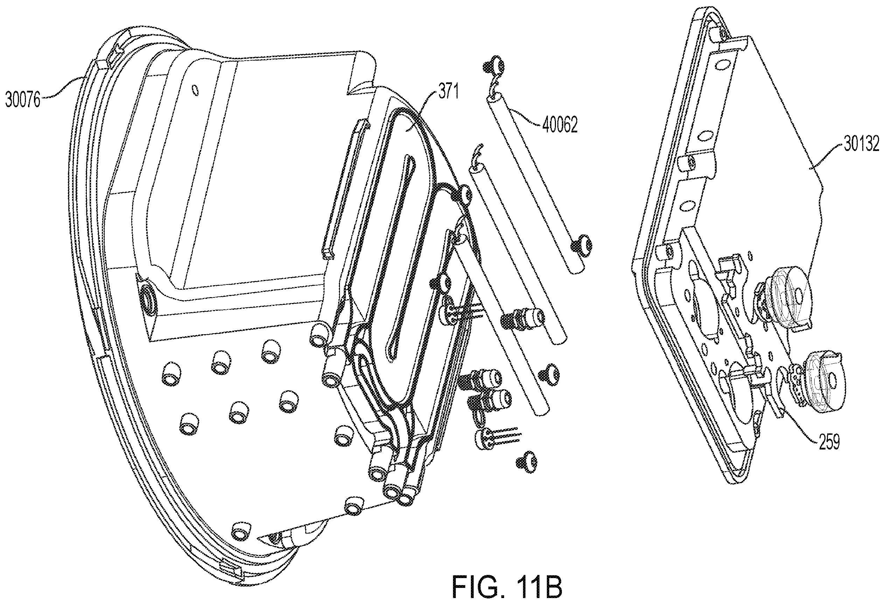

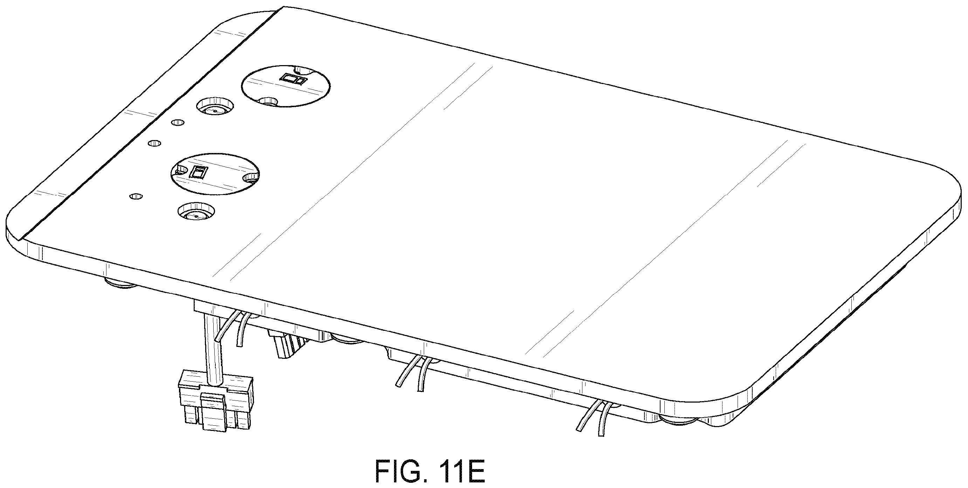

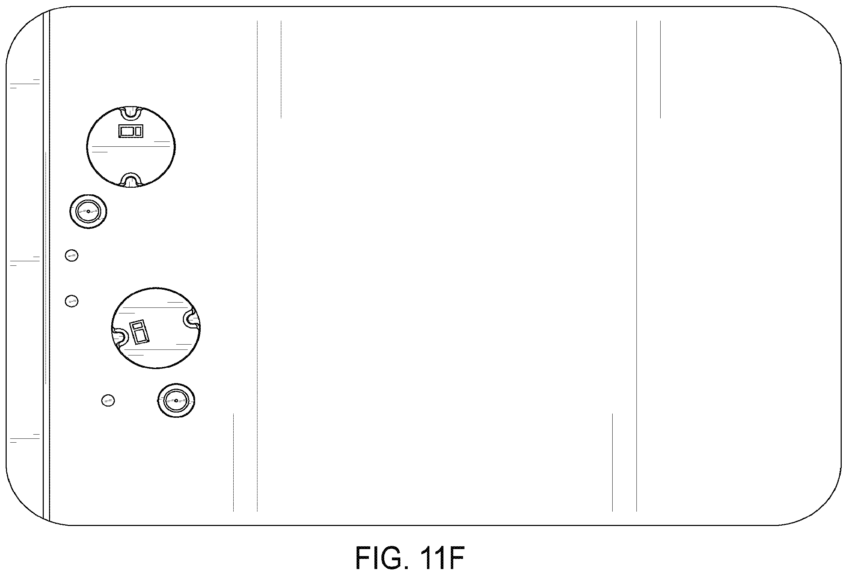

Referring now to FIG. 4C, flow of fluids in an exemplary configuration is illustrated by arrows on FIG. 4C. Starting with fluid in a reservoir (not shown) in tissue container 30076, perfusate exits tissue container 30076 in the tubing associated with arrow 207, and enters perfusion pump 20005, and is pumped through/from perfusion pump 20005 in the direction of arrow 367/369/365. The perfusate travels past sensors in the direction of arrow 195, past pressure sensor 30126 and possibly other sensors, into oxygenator 40058, in the direction of arrow 197, and into thermal exchange area 371 (FIG. 11B), in the direction of arrow 203. Perfusate exits thermal exchange area 371 (FIG. 11B) in the direction of arrow 187, past sensors such as a pressure sensor, in the direction of arrow 191, and into bubble trap 30088. Perfusate exits bubble trap 30088 in the direction of arrow 193, past tube guides 179 and 181, past durable flow meter 141 (FIG. 3A), in the direction of arrow 189, and into the cannulated tissue through connector 183. Fluids associated with the functioning of the tissue drain into the reservoir, and the closed loop perfusate movement continues. If desired, output from a cannulated orifice of the tissue can flow from the tissue in the direction of arrow 373 into output monitor 30051. Depending upon, for example, the condition of the output, the fluid in output monitor 30051 can travel to drainbag 131 (FIG. 4A) in the direction of arrow 201 or back to the reservoir in the direction of arrow 205. A vent line, teed into a line connecting output monitor 30051 and tissue container 30076, includes a sterile filter that vents to atmosphere. In an aspect, one end of the vent line is coupled with the tissue container, and the other end is coupled with a pump that is used to set up a slightly negative pressure, just below atmospheric pressure, within the tissue container. In an aspect, a pressure in the tissue container that is slightly lower than venous pressure mimics interstitial pressure, which is slightly negative to venous pressure, encouraging integrity in the veins, and discouraging kinking and collapsing of the veins. Other flow paths are contemplated by the exemplary configuration of the present teachings. Alternative flow paths can be "manually" or automatically initiated. In an aspect, possible flow paths can be displayed at a user interface, and the user can pick a flow path. In an aspect, a controller can access a recipe and/or the user-selected flow path and open/close valves associated with the pneumatic assembly in order to move perfusate and/or infused material in paths possibly different from the depicted path. The technology associated with perfusion pump 20005 is described in U.S. Patent # 9,999,717 to DEKA Products Limited Partnership, entitled Systems and Methods for Detecting Vascular Access Disconnection, issued on June 19, 2018, and incorporated herein by reference in its entirely. To provide pulsatile flow, a pause is allowed between delivery to a first pump chamber and delivery to a second pump chamber so that the pressure can fall to a desired amplitude. The delivery volume is adjusted to target desired beats/minute. In an aspect, the chamber pressure valve can be closed before the fluid valve to emulate a sawtooth method.

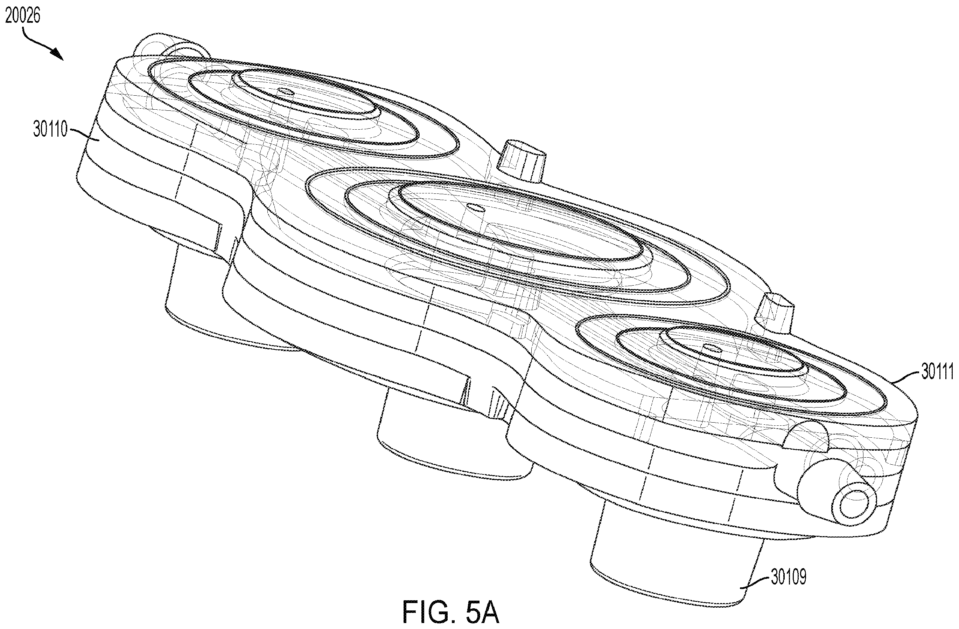

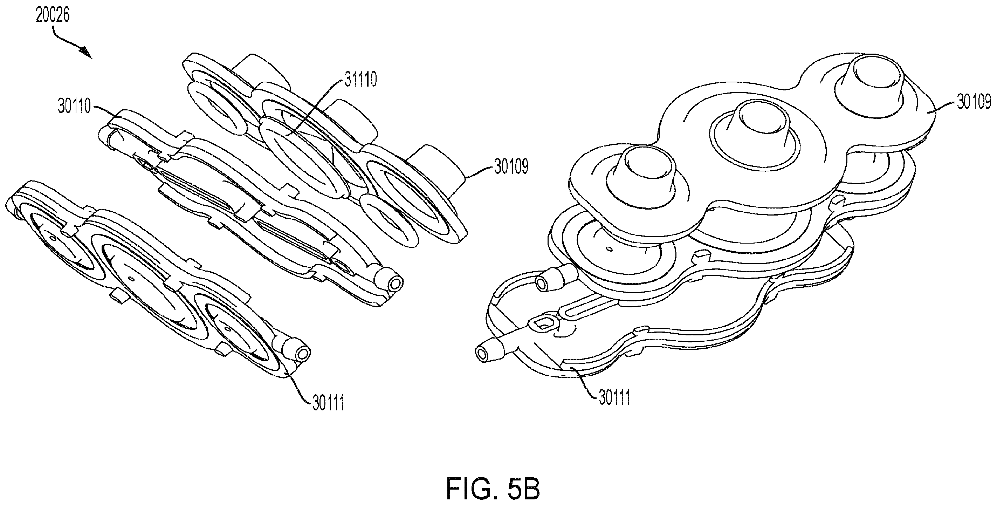

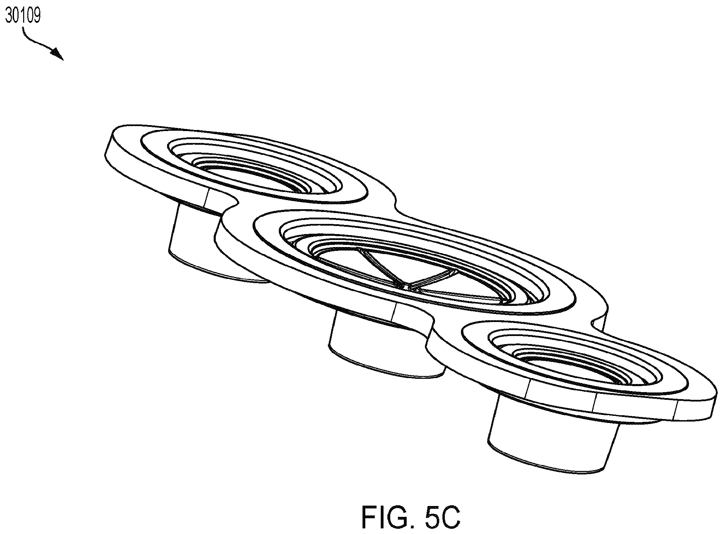

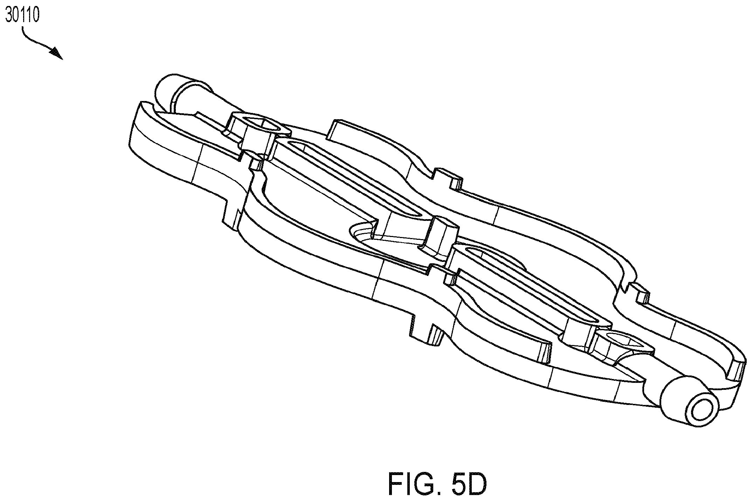

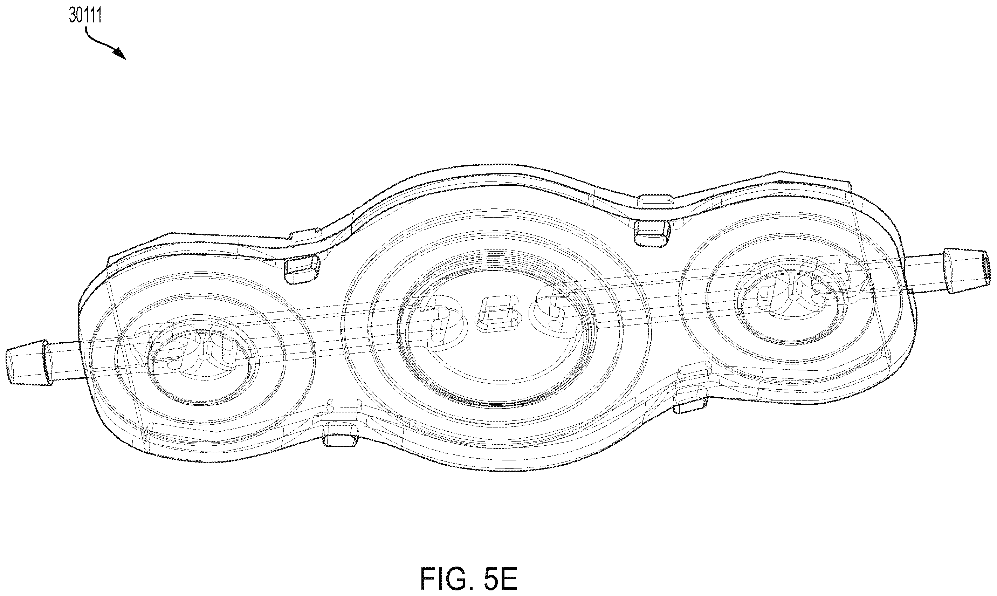

Referring now to FIGs. 5A-5E, a configuration of a first kind of infusion pump is shown. The depicted infusion pump follows the same process as perfusion pump 20005 (FIG. 4B), but instead delivers intermittent boluses, so only needs a single chamber. Infusion pump 20026 includes infusion pump cover 30111, infusion pump midbase 30110, infusion pump pneumatic cover 30109, and gaskets 31110 fitted to prevent leakage between pump midbase 30110 and pneumatic cover 30109. The technology associated with a second kind of infusion pump 21055pi (FIG. 2B) is described in U.S. Patent Publication # 2021/0393870 to DEKA Products Limited Partnership, entitled Infusion Pump Assembly, published on December 23, 2021, and incorporated herein by reference in its entirety.

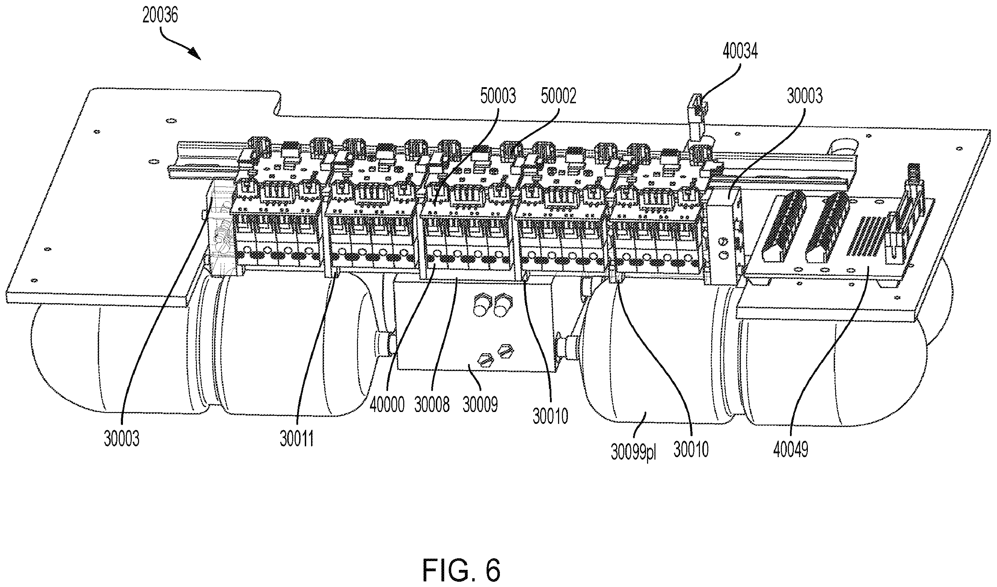

Referring now to FIG. 6, pneumatic pumping assembly 20036 of the exemplary configuration is shown. Air supply tanks 30099pl feed compressed or low pressure air into accumulation tank manifold block 30009, which supplies compressed or vacuumed air to regulator manifold block 30008. There is one array of valves 40000/valve control 50002/pressure sensor 50003/H-chambers pneumatic manifold block 30011/H-valves pneumatic manifold block 30010 for each supply tank 30099pl, and one for manifold block 30008. The manifold blocks arc surrounded by pumping manifold end caps 30003, and mounted upon pneumatics base plate 30151. Pneumatic assembly is connected to electronic control boards through electronic connections provided by breakout board 40049. Pneumatic pumping assembly 20036 drives the pumping cassettes of the exemplary configuration, and the controller chooses valves on the pumping cassettes to activate based on any or all of user input, recipe values, and sensor input. Air pump 40034 provides compressed air into the system. A vacuum pump provides low pressure air into the system.

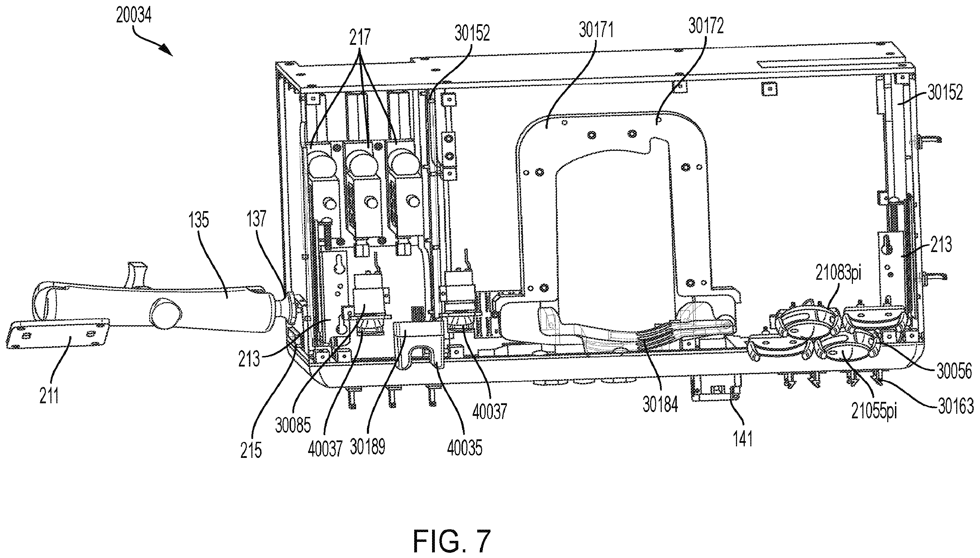

Referring now to FIG. 7, a top view of some of the durable components is shown. Mass flow controllers 217 establish stable gas flow by controlling mass flow for pneumatic pump control, and for supplying a gas mixture to the perfusate. Any mass flow controller having a desired accuracy, control range, repeatability, and response time can be used. Portions of mounting and framing components that enable the exemplary configuration to fit into a relatively small footprint while incorporating both durable and disposable aspects are shown, such as mounting guide rails 30152, tissue container locking base 30171/30172, pinch valve mount 30085, output level sensor mounting spacer 30189, tissue container surrounding shell 30184, pneumatic infusion pump durable arm 30163, infusion pump mount 30056, USB hub 215, I2C expansion board, and flow meter 141. Other durable components include pinch valves 40037 configured to control fluid flow based on controller commands, for example. The display in the exemplary configuration is mounted and oriented according to mounting plate 211, display monitor ball base 137, and socket arm 135. The enclosure lid can be raised and lowered with the assistance of hinged lid supports 213.

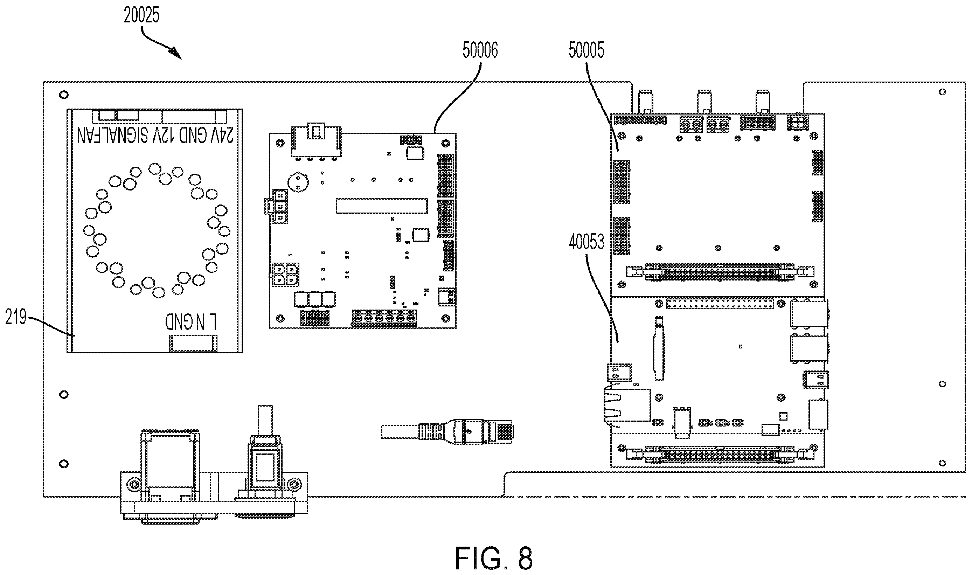

Referring now to FIG. 8, electronics assembly 20025 of the exemplary configuration is shown. Exemplary electronics include power supply 219, power and relay board 50006, interface board 50005, and processor development board 40053. Other circuit boards that are not shown are one or more CPUs and one or more network interfaces. Optionally, a GPU can be included.

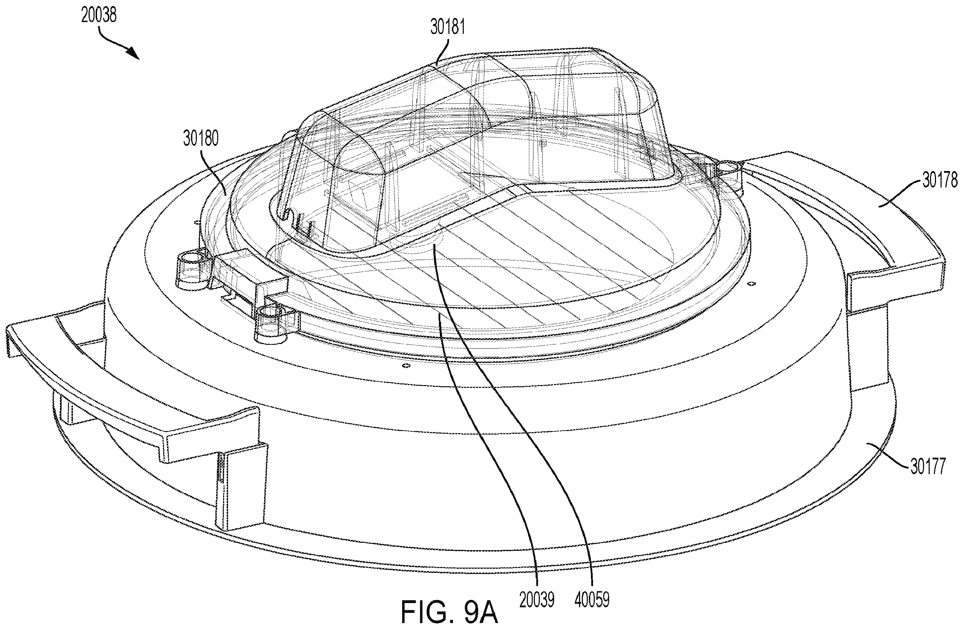

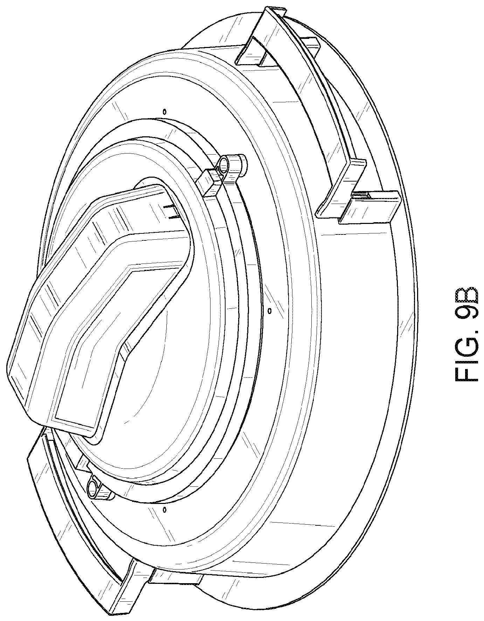

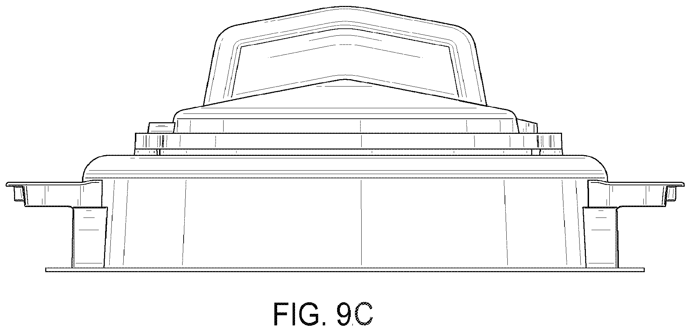

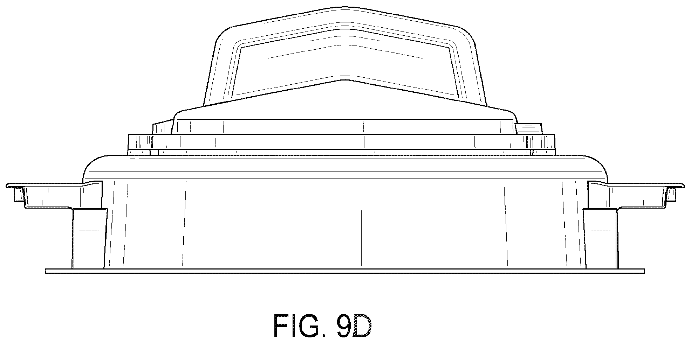

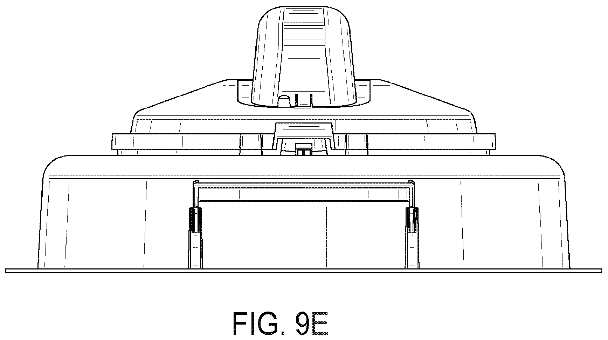

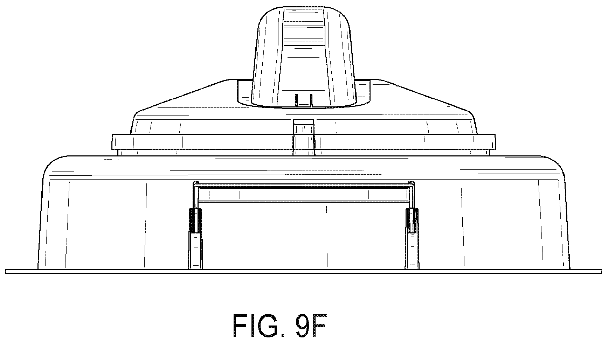

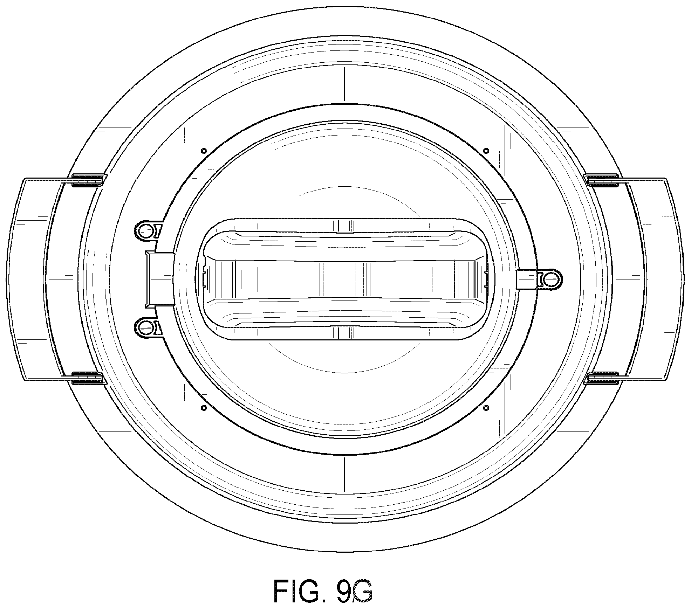

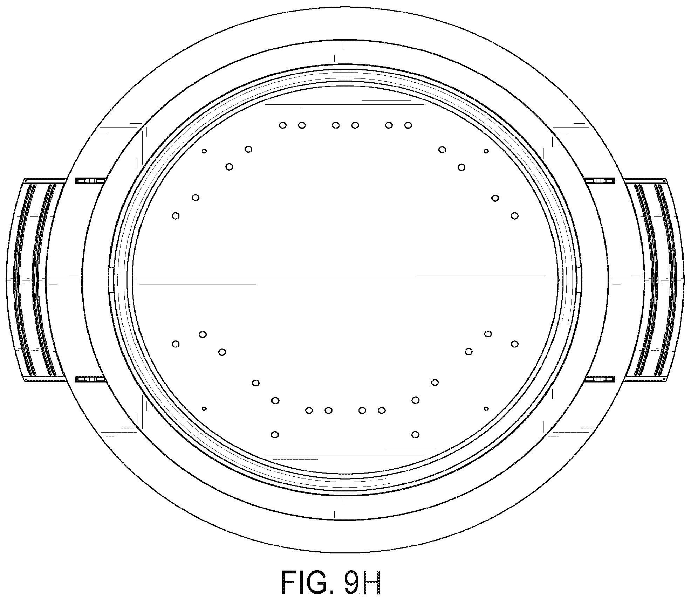

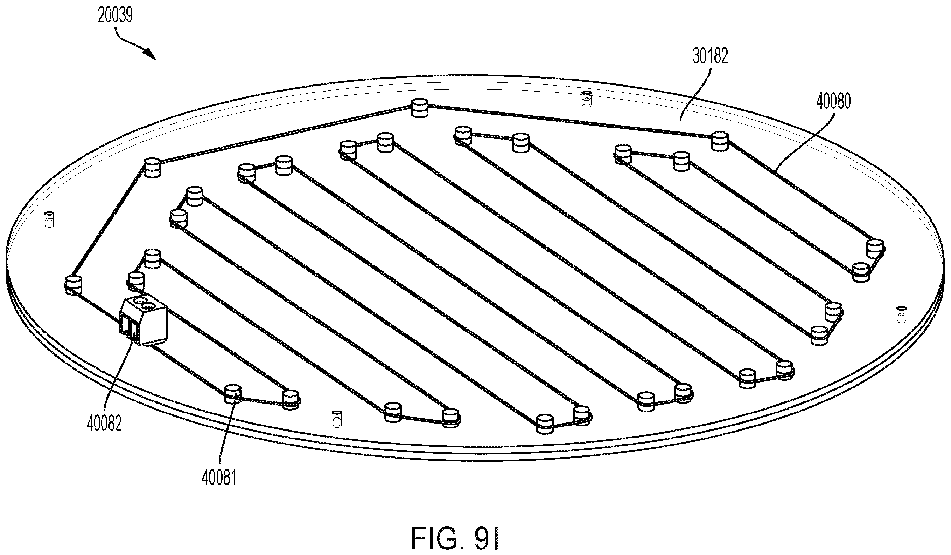

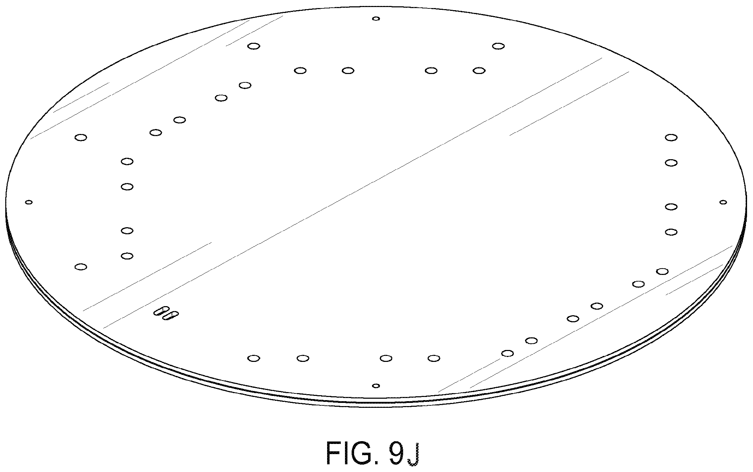

Referring now to FIGs. 9A-9C, the durable lid assembly 20038 (FIG. 9A) is shown. Durable lid assembly 20038 (FIG. 9A) sits atop the tissue container and enables visual and other monitoring of the tissue. Assembly 20038 (FIG. 9A) includes sensor cover 30181 (FIG. 9A), sensor mount 30180 (FIG. *9A**),* hood handle 30178 (FIG. 9A), and hood housing 30177 (FIG. 9A). A sensor such as camera 40059 (FIG. 9A) is mounted upon sensor mount 30180 (FIG. 9A) and protected from the environment by sensor cover 30181 (FIG. 9*A)* and hood housing 30177 (FIG, 9A). Other types of sensors can be mounted upon sensor mount 30180 (FIG. 9A), for example, sensors that detect characteristics of the underlying tissue. A transparent, semi-transparent or opaque environmental barrier separates the sensor(s) from the tissue below. In an aspect, the barrier is transparent to all electromagnetic wave frequencies or selected frequencies, or transparent in a pre-selected window and opaque in other areas of the barrier, or opaque overall to all or certain frequencies. For visually-dependent sensors such as cameras, the exemplary configuration includes healing assembly 20039 (FIG. 9B) to reduce condensation and maintain a clear view of the tissue. Heating assembly 20039 (FIG. 9ff) includes heating top 30182 (FIG. 9B) to protect heating element 40080 (FIG. 9B), heat dowels 40081 (FIG. 9B) that are situated to guide heating element 40080 (FIG. 9B), and heat terminal 40082 (FIG. 9B) connecting heating element 40080 (FIG. 9B) to a power supply.

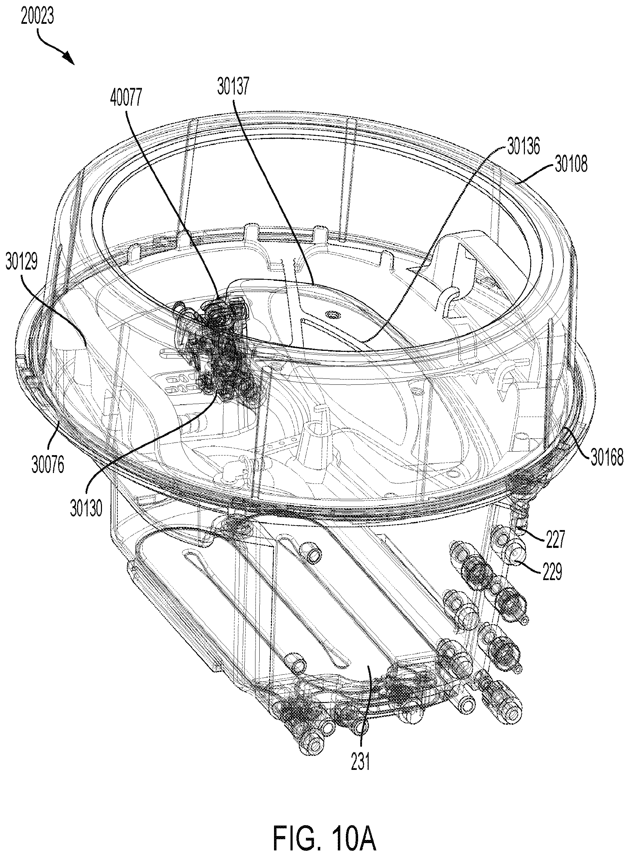

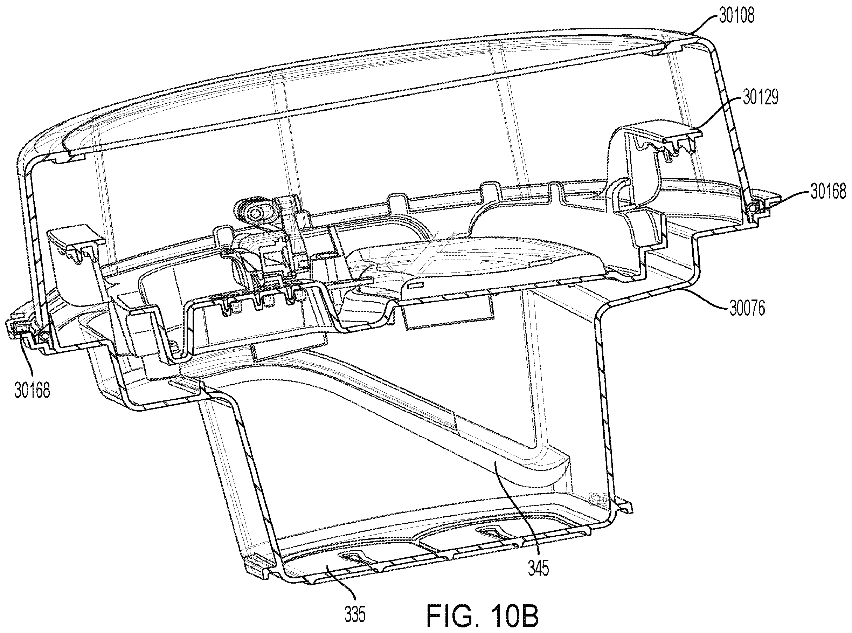

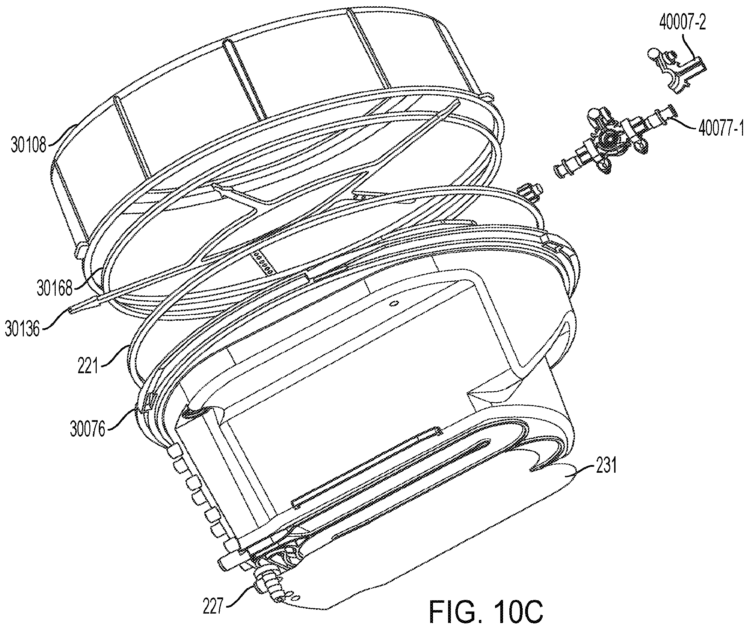

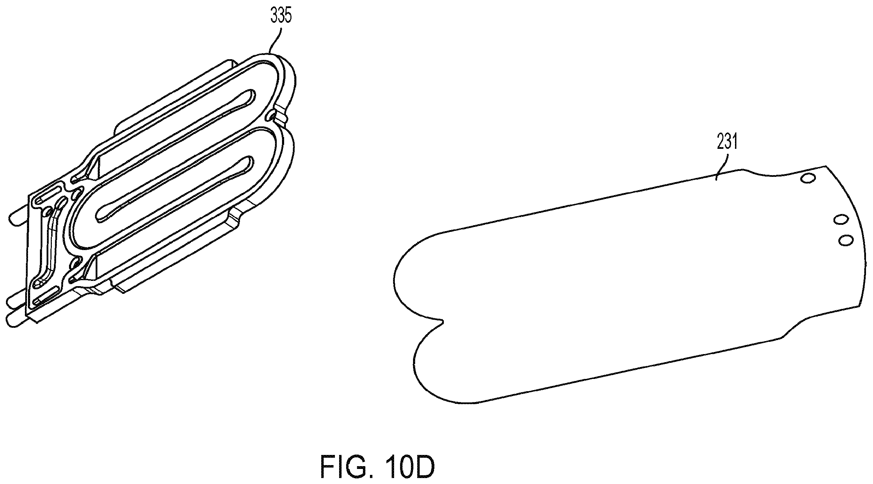

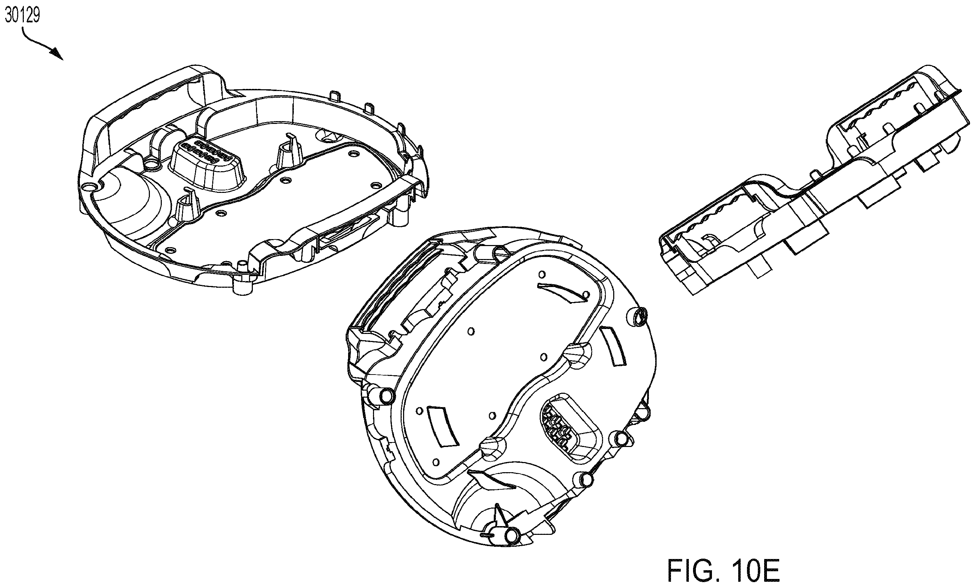

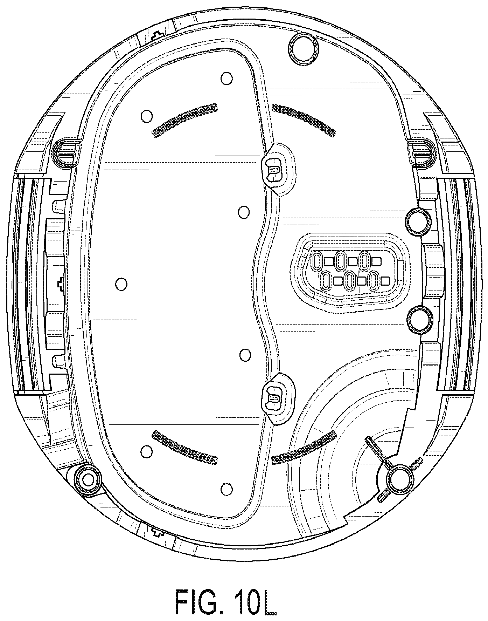

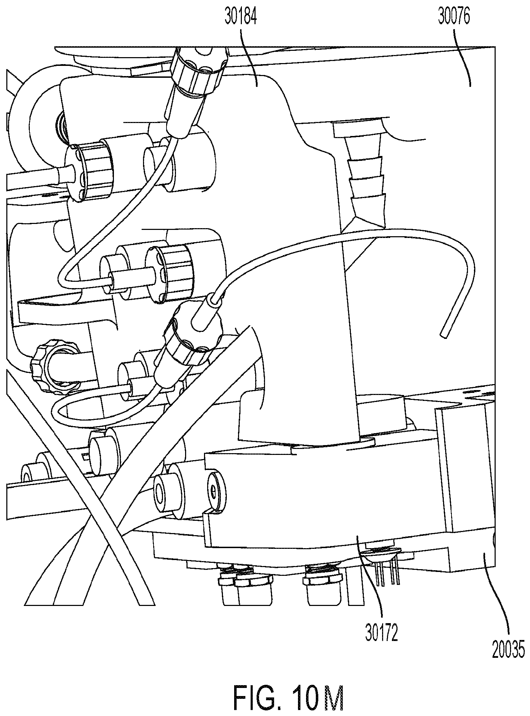

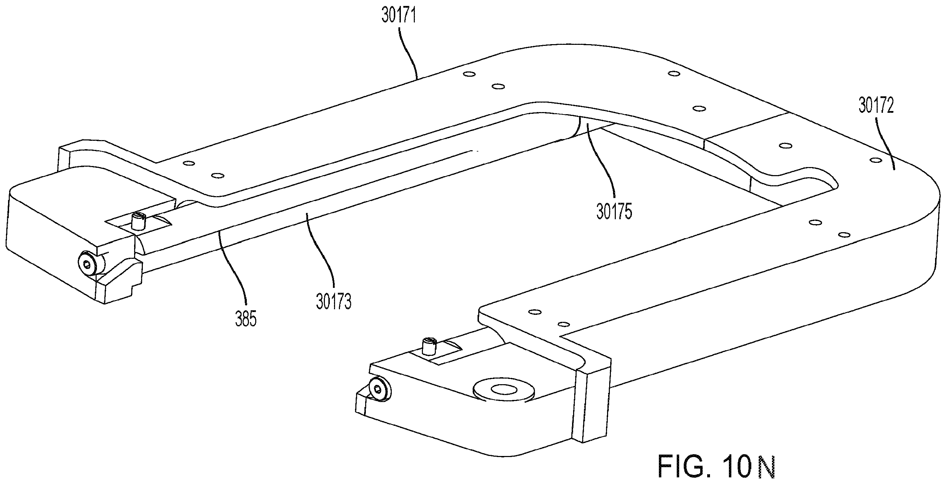

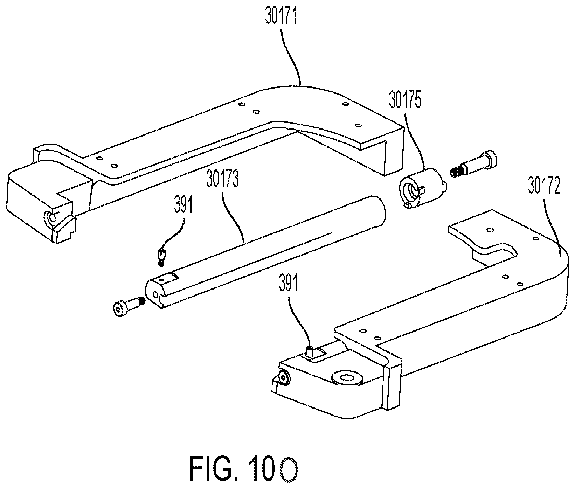

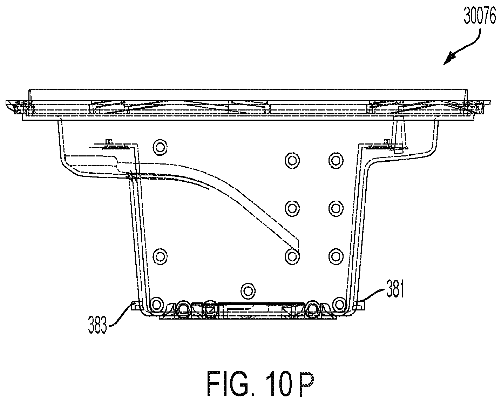

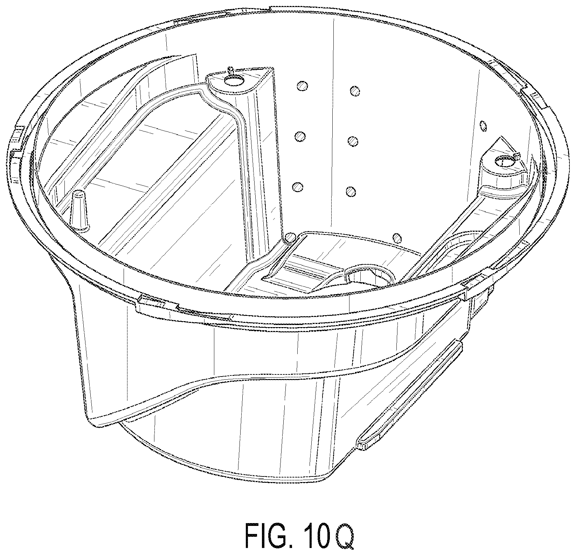

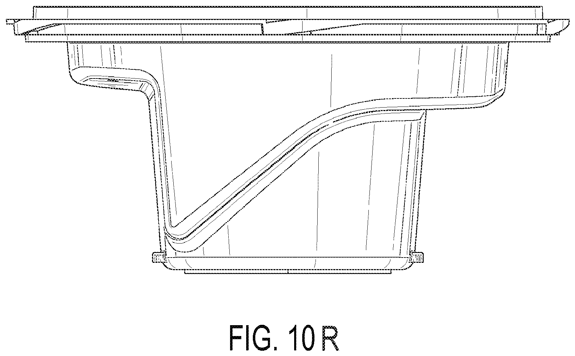

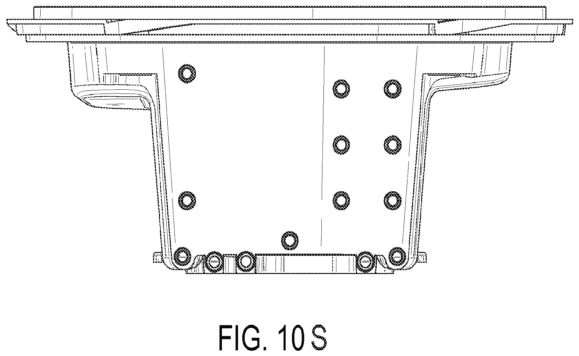

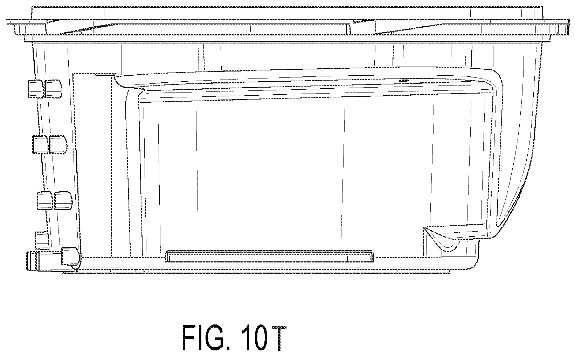

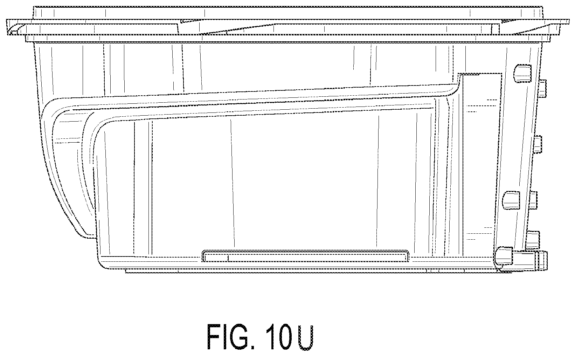

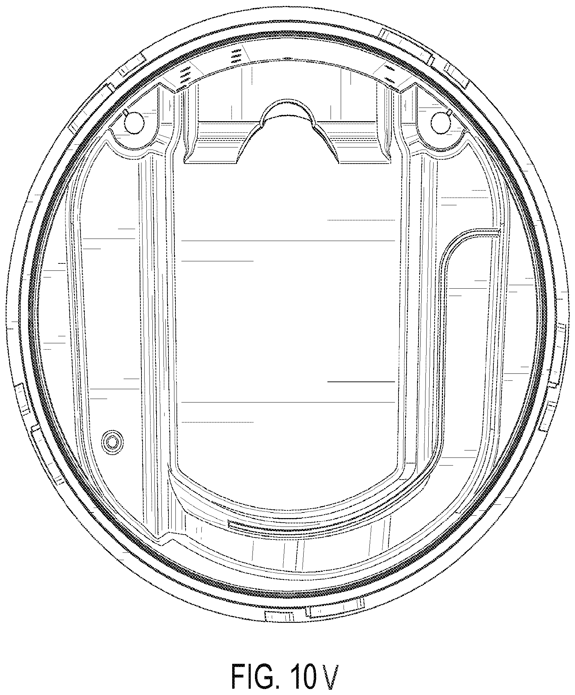

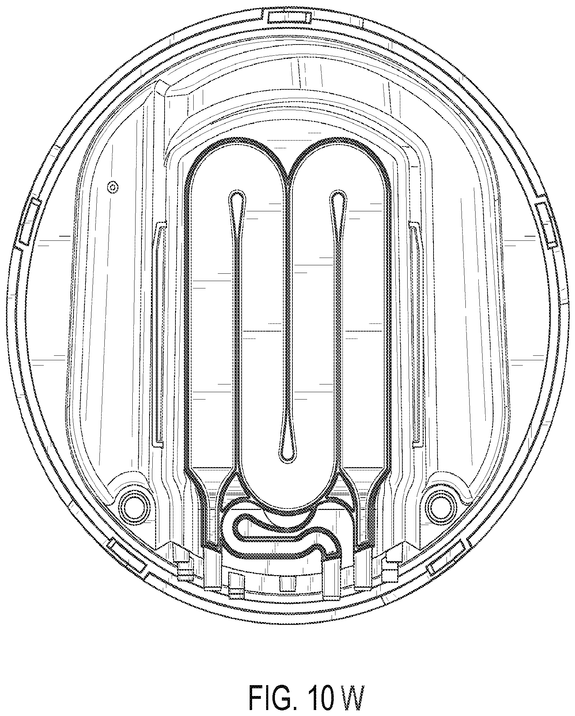

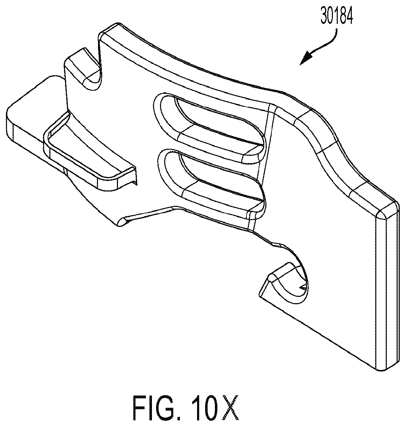

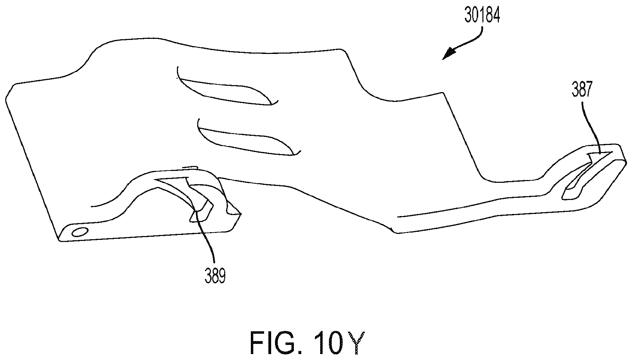

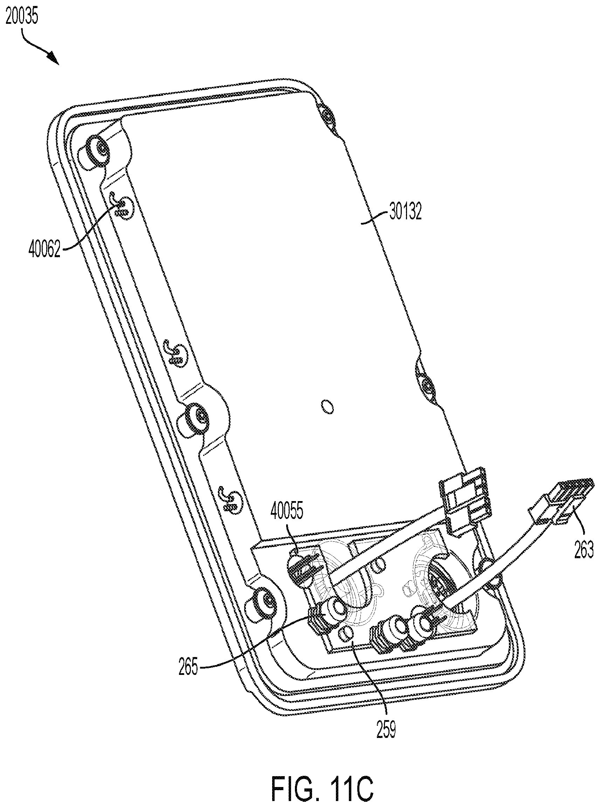

Referring now to FIGs, 10A-10E tissue container assembly 20023 is shown. Tissue container assembly 20023 includes an environmental enclosure, a tissue container, and the disposable part of thermal control of the perfusate. Tissue container 30076 is covered by lid 30108, where gasket 30168 provides environmental sealing between tissue container 30076 and lid 30108. Within tissue container 30076 is placed tissue holder 30129 (FIGs. 10A and 10E). Tissue holder 30129 (FIG. 10E) is a removable platform upon which the tissue is placed and cannulated if necessary. After the tissue is situated on the removable platform, the tissue and platform are placed within tissue container 30076 and remain in the sealed environment until the maintenance and assessment processes are complete, for example, until the t issue is transplanted. Each tissue platform 30129 (FIG. 10E) is configured for a group of tissue types or a particular tissue type, having cannulation opportunities and cavities positioned according to the physiology of the tissue type. The exemplary tissue holder 30129 (FIG. 10E) is configured to accommodate, at least, a kidney. Other tissue types can be accommodated as well. Cannula assemblies 40077-1/40077~2 (FIGs. 10C/D), when associated with the tissue, conduct perfusate from outside the tissue container into the tissue and conduct tissue output from the tissue to outside of the tissue container through connectors 227/229 (FIG. 10A) and tubing, forming at least one closed circulation loop. Connectors can include barbed and luer connectors, for example. Tissue placement mat 30137 (FIG. 10A) and tissue retaining gasket 30136 (FIG. 10A) hold the tissue in place on tissue holder 30129 (FIG. 10E). Below tissue holder 30129, and therefore below the tissue, is a perfusate reservoir as described herein with respect to perfusate flow. In an aspect, heat exchanger 335 (Fig. 10B) is integrated with the tissue container. In an aspect, heat exchanger sheet 231 (FIG. 1017) and heat exchanger 335 (FIG. 10D) are separate components. The combination is used, in conjunction with thermal plate assembly 20035 (FIG. 11C), to regulate the thermal profile of the perfusate in the circulation loop. Within tissue container 30076 (FIG. 10A) is output ramp 345 (FIG. 10B) that provides a gentle deposit of fluids from the tissue into the perfusate reservoir.

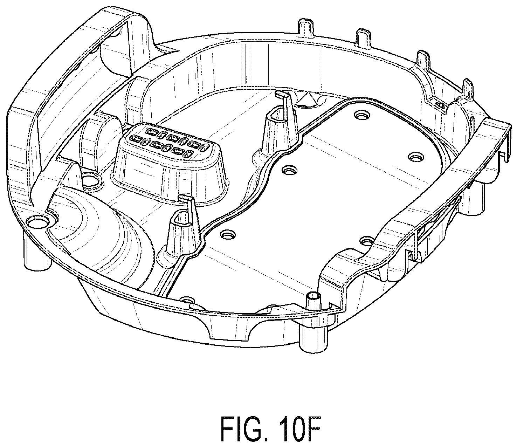

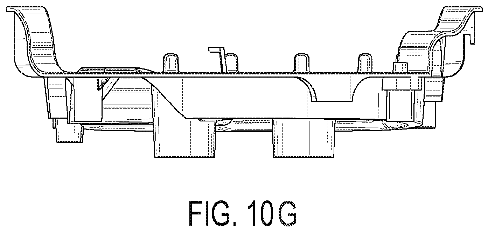

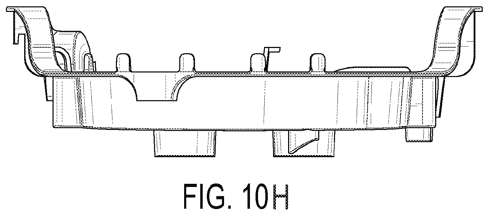

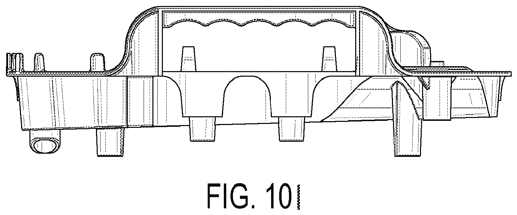

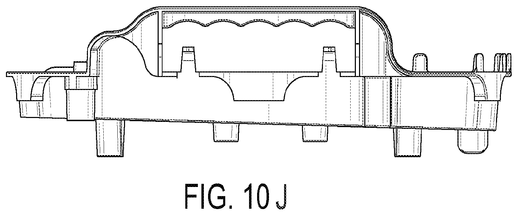

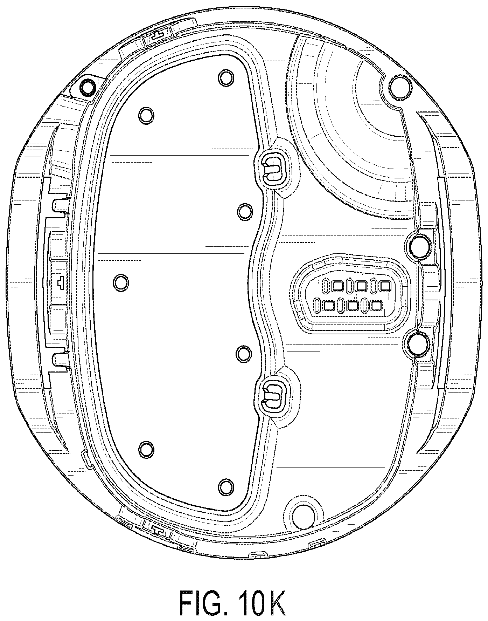

Referring now to FIGs. 10F-10K, shown are an implementation of components that, together, lock the disposable tissue container securely into the durable mount. Referring now to FIG. 10F, the swinging from an open position (not shown) to a closed position (shown in FIG. 10F) of container surrounding shell door 30184 secures tissue container 30076 into the durable enclosure and places tissue container 30076 in thermal coupling with heating plate assembly 20035. Durable container locking mechanism bases 30171/30172 (FIGS. 10G/H) are formed to accept, the geometry of the base of tissue container 30076 (FIG. 10I). In an aspect, bases 30171/30172 (FIGs. 10G/H) and the base of tissue container 30076 can be jointly formed into any geometry. In an aspect, bases 30171/30172 are formed as a single component. In an aspect, bases 30171/30172 (FIGs. 10G/H) include separate components that adapt for different sizes and shapes of the tissue container. In an aspect, tissue container 30076 includes rails 381/383 (FIG. 10I) that engage with guides .385 (FIG. 10G) on container locking camshaft 30173 (FIG. 10H) which engages with container locking torsion pivot 30175 (FIG. 10H). To set up the configuration of the system of the present teachings, rails 381/383 (FIG. 10I) are engaged with guides 385 (FIG. 10G), and tissue container 30076 (FIG. 10I) is moved into position within the durable enclosure, atop heating plate assembly 20035 (FIG. 10F). When tissue container 30076 (FIG. 10I) is fully in position, shell door 30184 (FIGs. I0J/K) is moved from an open position (not shown) to a position in which shell door 30184 (FIGs. 10J/K) is flush against tissue container 30076 (FIG. 10I) and other components of the configuration. As shell door 30184 (FIGs. 10J/K) is moving from an open to a closed position, pins 391 /393 (FIG. 10H) engage with pin runs 387/389 (FIG. 10K), causing rotation of locking camshafts 30173 (FIG. 10H) (one for each of container locking mechanism bases 30171/30172 (FIG. 10H)). The rotation causes a force upon rails 381/383 (FIG. 10I) and therefore secures tissue container 30076 (FIG. 10I) in thermal coupling with heating plate assembly 20035 (FIG. 10F). Tissue container 30076 (FIG. 10I) is locked into position when shell door 30184 (FIG. 10F) is closed by locking torsion pivots 30175 (FIG. 10H). Opening shell door 30184 (FIG. 10F) causes camshafts 30173 (FIG. 10H) to rotate in a reverse direction, unlock torsion pivots 30175 (FIG. 10H), and release tissue container 30076 (FIG. 10I). Tissue container 30076 (FIG. 10I) is a disposable component in some configurations and is removed and replaced when the tissue maintenance is complete.

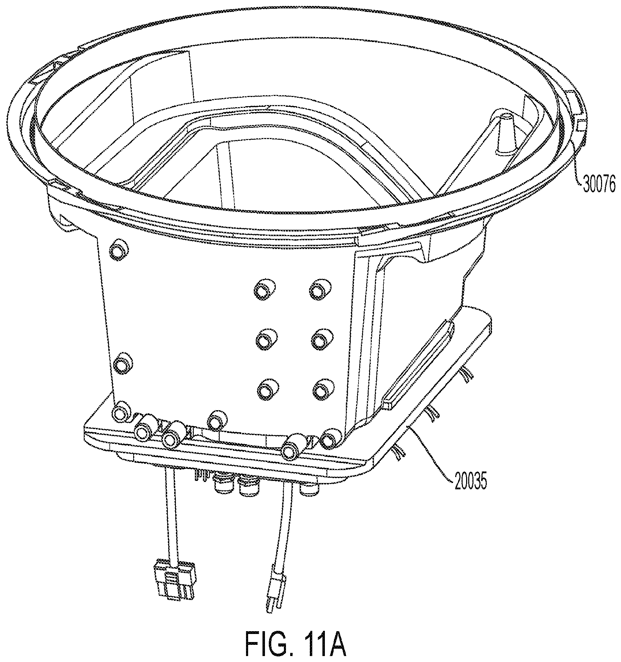

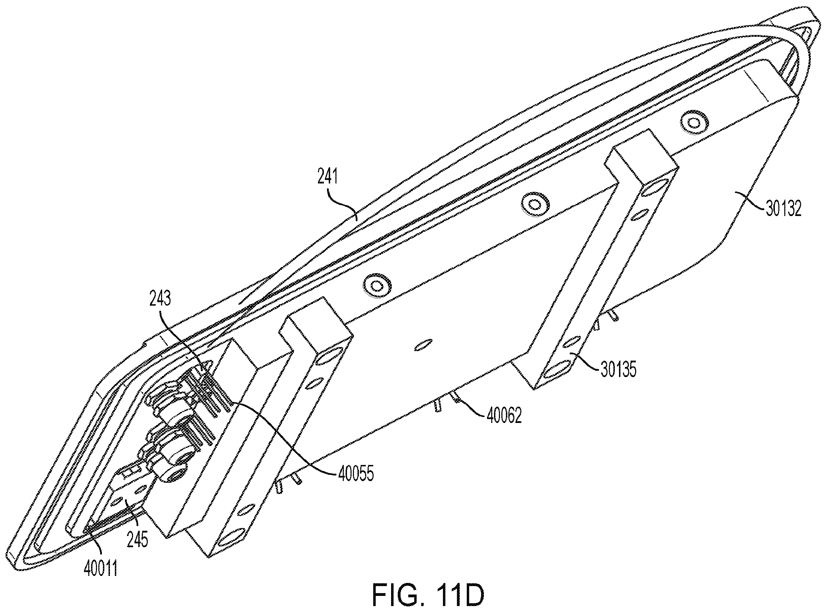

R eferring now to FIGs. 11A-11F, disposable tissue container 30076 is shown in association with durable thermal adjustment assembly 20035 and heating plate mounting bracket 30135 (FIG. 11D). Thermal adjustment assembly 20035 includes cartridge heaters 40062 (FIG. 11B), situated within thermal adjustment plate 30132 (FIG. 11B), as well as oximeter breakout 263 (FIG. 11C), oximeter 40011 (FIG. 11D), oximeter mount 245 (FIG. 11D), sensor securement 259 (FIG. 11C), fiber optic connector 265 (FIG. 11C), temperature sensor mount 243 (FIG. 1 ID), and IR temperature sensor 40055 (FIG. 11C), for measuring the temperature and controlling thermal adjustment plate 30132 (FIG. 11 B). O ring 241 (Fig. 11 D) seals durable thermal plate assembly 20035 (FIG. 11C) from environmental invasion.

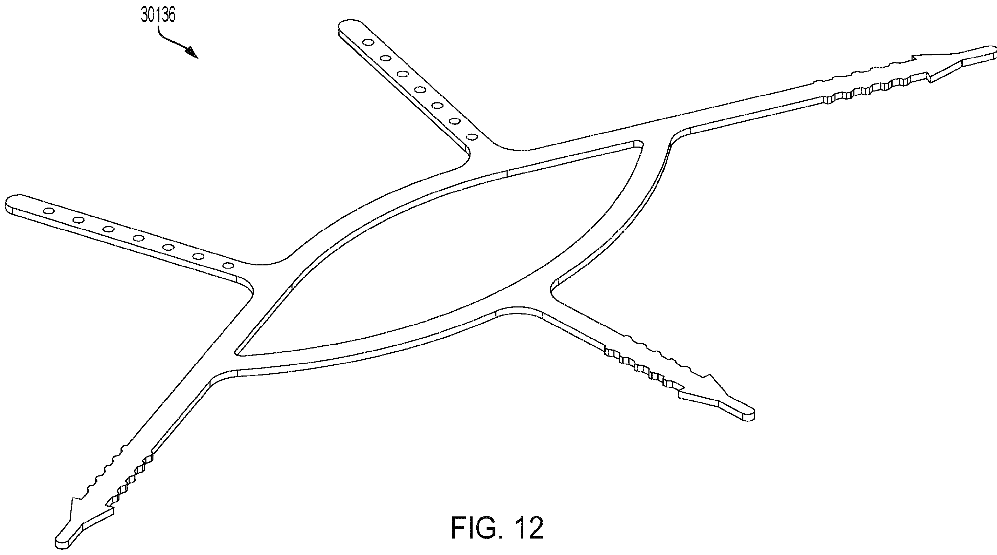

Referring now to FIG. 12, tissue strap 30136 includes arms configured to accommodate various tissue sizes. After the tissue is positioned, tissue strap 30136 is placed atop the tissue, and the arms are held in place by slots on the tissue platform that secure tissue strap 30136.

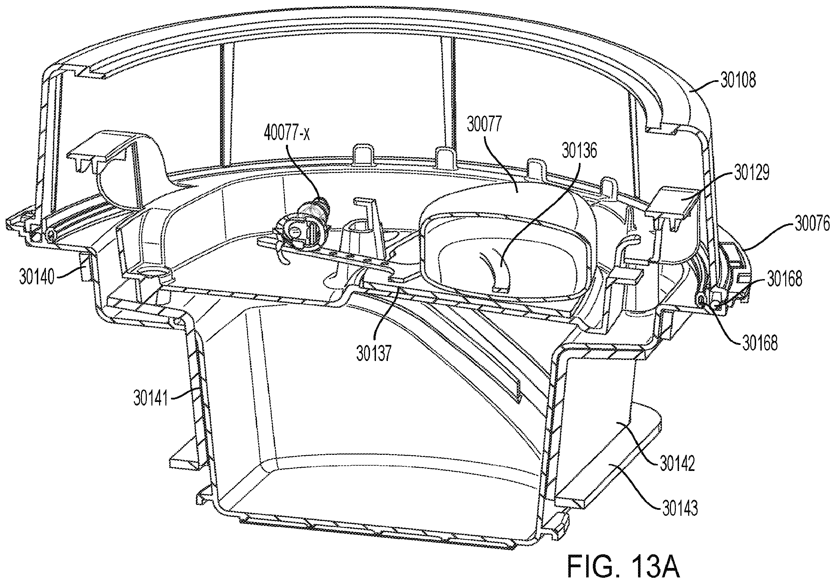

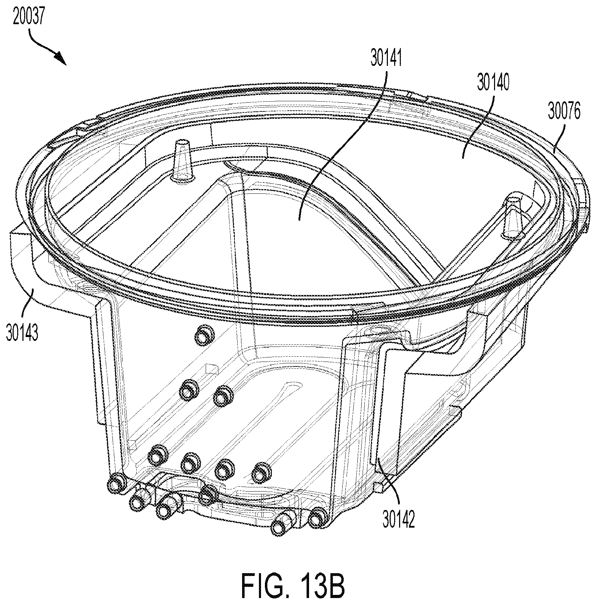

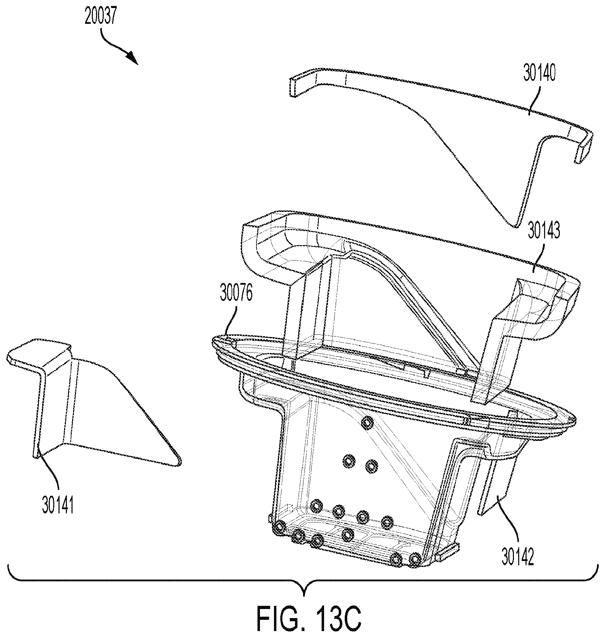

Referring now to FIGs. 13A-13C, a second exemplary configuration of the tissue container disposable and durable components is shown. The second configuration includes tank thermal adjustment assembly 20037 (FIG. 13B) including insulation 30143 and thermal adjustment elements 30140/30141/30142 around tissue container 30076 to accomplish thermal and moisture control of the tissue. Shown are tissue holder 30077 and tissue 30136.

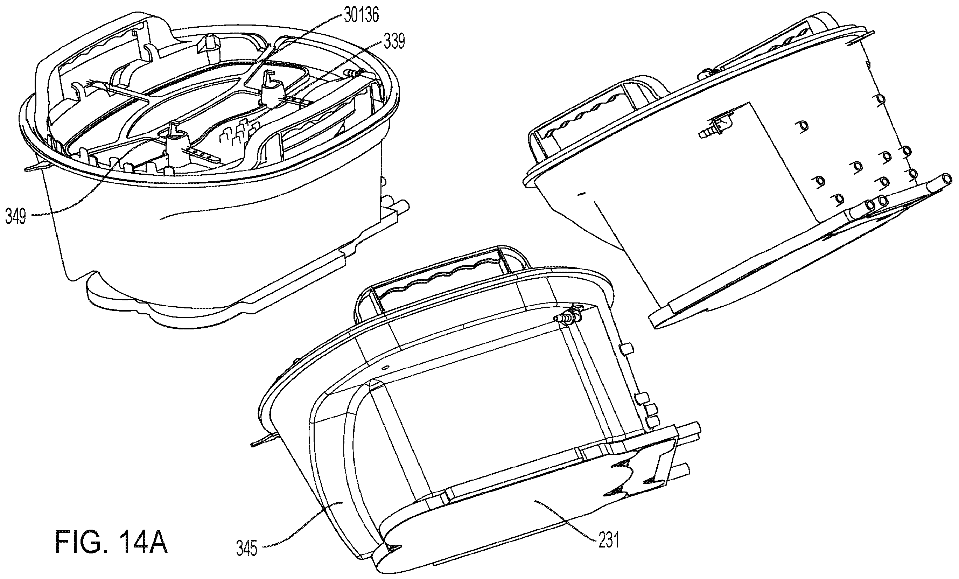

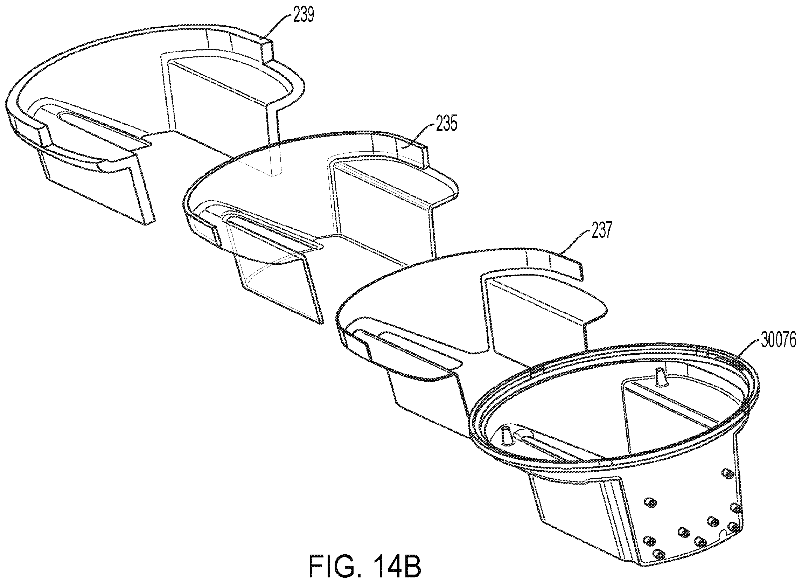

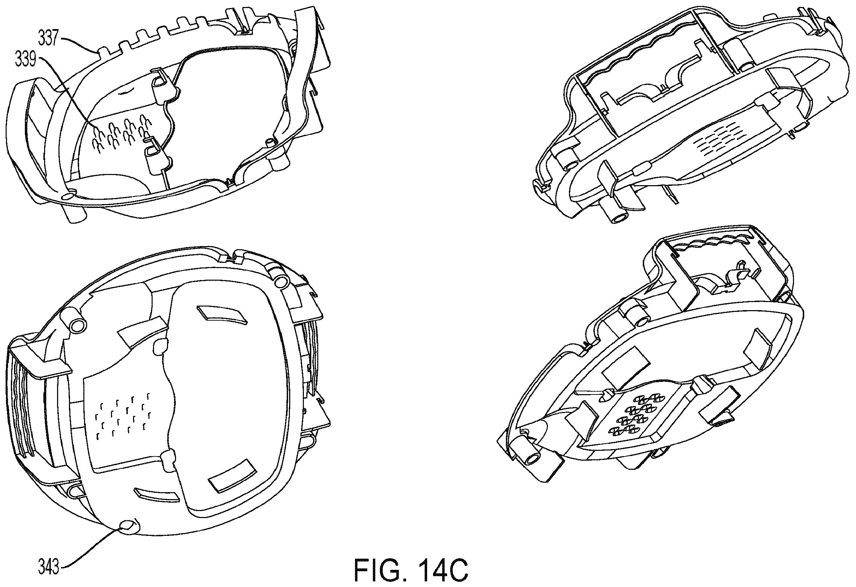

Referring now to FIGs. 14A-14C, a third exemplary configuration of the tissue container disposable and durable components is shown. The third configuration includes tank thermal adjustment panels 237 (FIG. 14B), tank thermal adjustment overmold 235 (FIG. 14B), and tank thermal adjustment insulation 239 (FIG. 14B), one surrounded by another, all surrounding tissue container 30076. The tissue platform includes merlons 339 (FIG. 14C) and tube guides 349 (FIG. 14A) and crenellations 337 (FIG. 14C) that are used to feed cannulation tubing from the tissue to connectors that provide a fluid path from outside and inside tissue container 30076 to the tissue and to outer destinations respectively. Fluid can flow into the reservoir of tissue container 30076 through cavity 343 (FIG. 14C).

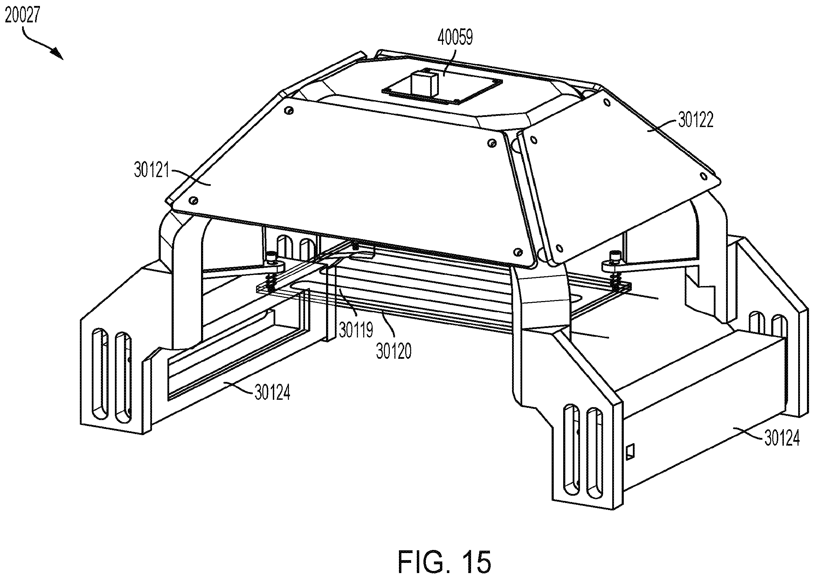

Referring now to FIG. 15, a second configuration of the tissue container hood 20027 is shown. In this configuration, lighting is taken into account. Light blocking plates 30121/30122 and light box 30124 manage the illumination of the tissue. Further window thermal adjustment 30119 and window thermal adjustment top 30120 manage condensation on the disposable tissue container lid 30108 (Fig. 10A) to maintain a clear view' of the tissue for sensor 40059.

Various alternatives and modifications can be devised by those skilled in the art without departing from the disclosure. Accordingly, the present disclosure is intended to embrace all such alternatives, modifications and variances. Additionally, while several example configurations of the present disclosure have been shown in the drawings and/or discussed herein, it is not intended that the disclosure be limited thereto, as it is intended that the disclosure be as broad in scope as the art will allow and that the specification be read likewise. Therefore, the above description should not be construed as limiting, but merely as exemplifications of particular configurations. In addition, those skilled in the art will envision other modifications within the scope and spirit of the claims appended hereto. Other elements, steps, methods and techniques that are insubstantially different from those described above and/or in the appended claims are also intended to be within the scope of the disclosure.

The drawings are presented only to demonstrate certain examples of the disclosure. And, the drawings described are only illustrative and are non-limiting. In the drawings, for illustrative purposes, the size of some of the elements may be exaggerated and not drawn to a particular scale. Additionally, elements shown within the drawings that have the same numbers may be identical elements or may be similar elements, depending on the context.

Where the term "comprising" is used in the present description and claims, it does not exclude other elements or steps. Where an indefinite or definite article is used when referring to a singular noun, e.g. "a", "an", or "the", this includes a plural of that noun unless something otherwise is specifically stated. Hence, the term "comprising" should not be interpreted as being restricted to the items listed thereafter; it does not exclude other elements or steps, and so the scope of the expression "a device comprising items A and B" should not be limited to devices consisting only of components A and B.

Furthermore, the terms "first", "second", "third," and the like, whether used in the description or in the claims, are provided for distinguishing between similar elements and not necessarily for describing a sequential or chronological order. It is to be understood that the terms so used arc interchangeable under appropriate circumstances (unless clearly disclosed otherwise) and that the example configurations of the disclosure described herein are capable of operation in other sequences and/or arrangements than are described or illustrated herein.

## Claims

1. A method for maintaining tissue for transplant comprising:
mounting the tissue on a tissue platform (30129) and preparing it for connection to a tissue enclosure;
coupling the orifices of the tissue with pre-selected locations on the tissue platform (30129) through tubing and tissue platform connectors (183);
directing venous output from the tissue into a fluid reservoir within the tissue enclosure; coupling the tissue platform connectors (183) to a perfusion system;
placing the tissue platform (30129) into the tissue enclosure, leaving an air space between the fluid reservoir (284) and the tissue platform (30129);
measuring output from the tissue;
recirculating perfusate from the fluid reservoir (284) back into an artery of the tissue;
monitoring and regulating the temperature of the perfusate prior to pumping the perfusate into the tissue;
pumping a gas mixture into an oxygenation device (271) configured to extract oxygen from the gas mixture and supply the oxygen to the perfusate as dissolved oxygen; and
monitoring vitality of the tissue through monitoring a status of tissue resistance pressure and flow changes, oxygen consumption, carbon dioxide, and pH.

2. The method of Claim 1, further comprising:
performing closed loop oxygen control.

3. The method of any preceding claim, wherein the tissue comprises a kidney.

4. The method of Claim 3, further comprising:
mounting the kidney on the tissue platform (30129);
cannulating the artery and a ureter in the kidney with the connectors and cannulation tubing;
and
positioning the cannulation tubing through protrusions on the tissue platform (30129), the protrusions preventing movement of the cannulation tubing on its way to the tissue platform connectors.

5. The method of Claim 3 or Claim 4, the output comprising:
venous output and urine.

6. The method of any preceding claim, wherein the output flows from the tissue to the fluid reservoir (284).

7. The method of any preceding claim, the perfusate comprising:
oxygen carriers, electrolytes, sugars, vitamins, and pH buffer.

8. The method of Claim 7, the oxygen carriers comprising:
pertluorocarbons, hemoglobin-based fluids, and sea worm hemoglobin-based fluids.

9. The method of any preceding claim, further comprising:
regulating the temperature to a pre-selected temperature value.

10. The method of Claim 9, the pre-selected temperature value is selected from a group consisting of: room temperature, body temperature, a hypothermic temperature range, a sub-normothermic range, a normothermic range, and a temperature in the range of 3-42°C.

11. The method of any preceding claim, wherein the ranges for the dissolved oxygen are between 74-160 mmHg arterial and 30-40 mmHg venous.

12. The method of any preceding claim, wherein the ranges for the carbon dioxide are between 35-45 mmHg.

13. The method of any preceding claim, further comprising:
replenishing of fluids, salts, nutrients, and other biological compounds; and
monitoring characteristics of the tissue to receive an indication of a status of the tissue.

14. The method of Claim 13, the replenishing comprising:
configuring an infusion pump at a flow rate of 1-20 mL/min.

15. The method of any preceding claim, further comprising:
cannulating a vein of the tissue; and
directing output from the vein using the tubing to the fluid reservoir (284).

16. A kit for maintaining tissue for transplantation, comprising:
disposable components including an oxygenator, a heat exchanger membrane and etched surface, a perfusion pump, an infusion pump, and a tissue enclosure;
durable components parts including a heat exchanger interface plate, a perfusion pump interface to pneumatics, a pneumatics system with valves and chambers, a pressure source, a vacuum source, at least one durable sensor, and at least one controller; and
an interface between the disposable components and the durable components.
